# EUROPEAN PATENT APPLICATION

(11) **EP 2 107 378 A1**
(43) Date of publication of application: **07.10.2009**
(21) Application number: 08703660.4
(22) Date of filing: 22.01.2008
(51) Int. Cl.: G01N 35/00

(54) **AUTOMATIC ANALYZING DEVICE, ORDERING MANAGEMENT SYSTEM, AND ORDERING MANAGEMENT METHOD**

(30) Priority: 25.01.2007 JP 2007015188
(71) Applicant: Olympus Corporation, Tokyo 151-0072 (JP)
(72) Inventor: SAKAGAMI, Toshio, Tokyo 151-0072 (JP)
(74) Representative: von Hellfeld, Axel
(86) International application number: PCT/JP2008/050816
(87) International publication number: WO 2008/090888

(57) **Abstract**

An automatic analyzer, an order management system and an order management method includes a managing database (43) that stores therein history information of an analysis period, a specimen count, and an analysis item of analysis performed in past, a usage quantity estimating unit (40a) that, based on the history information of an analysis period corresponding to a period required for upcoming analysis, calculates a product of a usage quantity of a reagent specified in an analysis item in the history information and a specimen count in the analysis period to estimate a usage quantity of the reagent for the upcoming analysis, a current-remaining-quantity calculating unit (40b) that calculates a reagent remaining quantity at the present time, an upcoming-remaining-quantity calculating unit (40c) that calculates a post-upcoming-analysis reagent remaining quantity by subtracting the usage quantity of the reagent estimated by the usage quantity estimating unit from the reagent remaining quantity at the present time calculated by the current-remaining-quantity calculating unit, and a reagent ordering unit (45a) that performs remaining quantity supervision for the reagent and, if the reagent remaining quantity calculated by the upcoming-remaining-quantity calculating unit is a positive value, places an order for the reagent to a reagent supplying source.

## Description

### TECHNICAL FIELD

The present invention relates to an automatic analyzer that performs analysis such as biochemical analysis and immunological tests in an automatic manner, an order management system, and an order management method.

### BACKGROUND ART

An automatic analyzer is a widely known apparatus that performs analysis such as biochemical analysis in an automatic manner. Such an automatic analyzer includes a specimen supplying unit, an analyzing unit, and a data processing unit. The specimen supplying unit successively supplies racks with sampling tubes. The analyzing unit includes a reaction tank and a cool reagent-container. In the reaction tank, a cuvette wheel and a measurement optical system are disposed. The cool reagent-container houses reagent bottles containing reagents that react with the specimen. The cuvette wheel houses cuvettes (reaction vessels) and is used to dispense a reagent from a reagent bottle and a specimen from a sampling tube. Moreover, the absorbance of a test liquid obtained by reaction in a cuvette (absorbance of a mixed liquid of a reagent and a specimen) is measured by, for example, the measurement optical system. The data processing unit obtains an analysis result by using the measured absorbance. If a reagent runs short before the analysis is complete, it is necessary to stop the analysis and replace the corresponding reagent bottle for restocking that reagent (for example, see Patent Document 1).

Patent Document 1: Japanese Patent Application Laid-open No. 2005-37171

### DISCLOSURE OF INVENTION

### PROBLEM TO BE SOLVED BY THE INVENTION

However, inventory quantity management or ordering time management regarding reagents is a cumbersome task that, conventionally, has been performed manually by an operator as necessary. That requires increased time and efforts.

The present invention has been made in view of the above problems in the conventional technology and it is an object of the present invention to provide an automatic analyzer, an order management system, and an order management method by which an estimated reagent remaining quantity is calculated based on an actual reagent usage quantity for an analyzing period that is comparable to an analyzing period of upcoming analysis and accordingly an order for reagents is placed. That enables optimal order management and inventory management of the reagent according to the usage quantity, reduces the time consumed in performing order management or inventory management, and reduces the efforts needed to be taken by the operator.

### MEANS FOR SOLVING PROBLEM

To solve the problems as described and achieve the object, an automatic analyzer according to the present invention is for analyzing a specimen by assaying a test liquid containing a predetermined quantity of a reagent dispensed according to an analysis item from a reagent bottle and a predetermined quantity of the specimen. The automatic analyzer includes an analysis history storing unit that stores therein history information of an analysis period, a specimen count, and an analysis item of analysis performed in past; a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating unit that calculates a current reagent remaining quantity; an upcoming-remaining-quantity calculating unit that calculates a post-upcoming-analysis reagent remaining quantity by subtracting the usage quantity of the reagent estimated by the usage quantity estimating unit from the current reagent remaining quantity calculated by the current-remaining-quantity calculating unit; and a reagent ordering unit that manages the reagent remaining quantity, the reagent ordering unit placing an order for the reagent to a reagent supplying source if the reagent remaining quantity calculated by the upcoming-remaining-quantity calculating unit is a positive value.

In the automatic analyzer according to the present invention, the automatic analyzer is connected to a host apparatus performing reagent ordering and is for analyzing a specimen by assaying a test liquid containing a predetermined quantity of a reagent dispensed according to an analysis item from a reagent bottle and a predetermined quantity of the specimen. The automatic analyzer includes an analysis history storing unit that stores therein history information of an analysis period, a specimen count, and an analysis item of analysis performed in past; a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating unit that calculates a current reagent remaining quantity; an upcoming-remaining-quantity calculating unit that calculates a post-upcoming-analysis reagent remaining quantity by subtracting the usage quantity of the reagent estimated by the usage estimating unit from the current reagent remaining quantity calculated by the current-remaining-quantity calculating unit; and a notifying unit that notifies the host apparatus of the reagent remaining quantity calculated by the upcoming-remaining-quantity calculating unit, the host apparatus managing the reagent remaining quantity.

In the automatic analyzer according to the present invention, the automatic analyzer further includes an information reading unit that reads a reagent usage quantity of stocked reagent. The current-remaining-quantity calculating unit calculates a current reagent remaining quantity that includes the reagent usage quantity read by the information reading unit.

In the automatic analyzer according to the present invention, the automatic analyzer is for analyzing a specimen by assaying a test liquid containing a predetermined quantity of a reagent dispensed according to an analysis item from a reagent bottle and a predetermined quantity of the specimen. The automatic analyzer includes an analysis history storing unit that stores therein history information of an analysis period, a specimen count, and an analysis item of analysis performed in past and any one of usage conditions including a usage quantity, a usage time, and a usage count of a material used in the analysis performed in past; a usage quantity estimating unit that estimates, based on the history information of an analysis period corresponding to a period required for upcoming analysis, a usage condition of the material for the upcoming analysis by adding, for each material, a usage condition of the material specified in an analysis item in the history information; an adding unit that performs, for each material, cumulative addition of a usage condition of the material including the usage condition of the material estimated by the usage quantity estimating unit; and a material ordering unit that manages the usage condition of the material, the material ordering unit instructing issuing of a warning notice and placing an order for the material to a material supplying source if the usage condition of the material cumulatively added by the adding unit reaches a usage limit condition for the material.

In the automatic analyzer according to the present invention, the automatic analyzer is connected to a host apparatus performing reagent ordering and is for analyzing a specimen by assaying a test liquid containing a predetermined quantity of a reagent dispensed according to an analysis item from a reagent bottle and a predetermined quantity of the specimen. The automatic analyzer includes an analysis history storing unit that stores therein history information of an analysis period, a specimen count, and an analysis item of analysis performed in past and any one of usage conditions including a usage quantity, a usage time, and a usage count of a material used in the analysis performed in past; a usage estimating unit that estimates, based on the history information of an analysis period corresponding to a period required for upcoming analysis, a usage condition of the material for the upcoming analysis by adding, for each material, a usage condition of the material specified in an analysis item in the history information; an adding unit that performs, for each material, cumulative addition of a usage condition of the material including the usage condition of the material estimated by the usage quantity estimating unit; and a notifying unit that notifies the host apparatus of the usage condition of the material added by the adding unit, the host apparatus managing the usage condition of the material.

In the automatic analyzer according to the present invention, the material includes at least one of a detergent liquid, a lamp, a Ferista tube, and a syringe, and the analysis history storing unit stores therein any one of a usage quantity of the detergent liquid, a usage time of the lamp, a usage count of the Ferista tube, and a usage count of the syringe in association with an analysis period, a specimen count, and an analysis item of the analysis performed in past.

To solve the problems as described above and achieve the object, in an order management system according to the present invention, a communication network is made up of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a reagent supplying source, the order management system performing reagent ordering from the automatic analyzer to the reagent supplying source. The automatic analyzer includes an analysis history storing unit that stores therein history information of an analysis period, a specimen count, and an analysis item of analysis performed in past; a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating unit that calculates a current reagent remaining quantity; an upcoming-remaining-quantity calculating unit that calculates a post-upcoming-analysis reagent remaining quantity by subtracting the usage quantity of the reagent estimated by the usage quantity estimating unit from the current reagent remaining quantity calculated by the current-remaining-quantity calculating unit; and a reagent ordering unit that manages the remaining quantity, the reagent ordering unit placing an order for the reagent to a reagent supplying source if the reagent remaining quantity calculated by the upcoming-remaining-quantity calculating unit is a positive value, and the managing device includes a reagent-order receiving unit that receives an order for the reagent from the automatic analyzer.

In the order management system according to the present invention, a communication network is made up of a plurality of automatic analyzers for analyzing a specimen by assaying a test liquid containing a predetermined quantity of a reagent dispensed according to an analysis item from a reagent bottle and a predetermined quantity of the specimen and a managing device connected to the automatic analyzer via a host apparatus and functioning as a reagent supplying source, the order management system performing reagent ordering from the respective automatic analyzers to the reagent supplying source. Each of the automatic analyzers includes an analysis history storing unit that stores therein history information of an analysis period, a specimen count, and an analysis item of analysis performed in past; a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating unit that calculates a current reagent remaining quantity; an upcoming-remaining-quantity calculating unit that calculates a post-upcoming-analysis reagent remaining quantity by subtracting the usage quantity of the reagent estimated by the usage estimating unit from the current reagent remaining quantity calculated by the current-remaining-quantity calculating unit; and a notifying unit that notifies the host apparatus of the reagent remaining quantity calculated by the upcoming-remaining-quantity calculating unit. The host apparatus includes an overall reagent-remaining-quantity estimating unit that calculates an overall estimated reagent remaining quantity by adding the reagent remaining quantities notified by the respective automatic analyzers; and a reagent ordering unit that manages the remaining quantity of the reagent, and determines necessity of reagent ordering, the reagent ordering unit placing an order for the reagent to a reagent supplying source if determining that the reagent ordering is necessary. The managing device includes a reagent-order receiving unit that receives an order for the reagent.

In the order management system according to the present invention, each of the automatic analyzers further includes an information reading unit that reads a reagent quantity of stocked reagent, and the current-remaining-quantity calculating unit calculates a current reagent remaining quantity that includes the reagent quantity of the reagent read by the information reading unit.

In the order management system according to the present invention, a communication network is made of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a material supplying source, the managing device performing reagent ordering from the automatic analyzer to the material supplying source. The automatic analyzer includes an analysis history storing unit that stores therein history information of an analysis period, a specimen count, and an analysis item of analysis performed in past and any one of usage conditions including a usage quantity, a usage time, and a usage count of a material used in the analysis performed in past; a usage estimating unit that estimates, based on the history information of an analysis period corresponding to a period required for upcoming analysis, a usage condition of the material for the upcoming analysis by adding, for each material, a usage condition of the material specified in an analysis item in the history information; an adding unit that performs, for each material, cumulative addition of a usage condition of the material including the usage condition of the material estimated by the usage quantity estimating unit; and a material ordering unit that manages the usage condition for the material, the material ordering unit instructing issuing of a warning notice and placing an order for the material to a material supplying source if the usage condition of the material cumulatively added by the adding unit reaches a usage limit condition for the material. The managing device includes a material-order receiving unit that receives an order for the material from the automatic analyzer.

In the order management system according to the present invention, a communication network is made up of a plurality of automatic analyzers for analyzing a specimen by assaying a test liquid containing a predetermined quantity of a reagent dispensed according to an analysis item from a reagent bottle and a predetermined quantity of the specimen and a managing device connected to the automatic analyzers via a host apparatus and functioning as a material supplying source, the order management system performing material ordering from the respective automatic analyzers to the material supplying source. Each of the automatic analyzers includes an analysis history storing unit that stores therein history information of an analysis period, a specimen count, and an analysis item of analysis performed in past and any one of usage conditions including a usage quantity, a usage time, and a usage count of a material used in the analysis performed in past; a usage estimating unit that estimates, based on the history information of an analysis period corresponding to a period required for upcoming analysis, a usage condition of the material for the upcoming analysis by adding, for each material, a usage condition of the material specified in an analysis item in the history information; an adding unit that performs, for each material, cumulative addition of a usage condition of the material including the usage condition of the material estimated by the usage quantity estimating unit; and a notifying unit that notifies the host apparatus of the usage condition of the material added by the adding unit, the host apparatus managing the usage condition of the material. The host apparatus includes an overall cumulative addition performing unit that calculates an overall cumulative usage condition by adding the usage conditions of the material notified by the respective automatic analyzers; a warning unit that issues a warning notice if the usage condition of the material added by the overall cumulative addition performing unit reaches a usage limit condition for the material; and a material ordering unit that that manages the usage condition of the material, the material ordering unit placing an order for the material to a material supplying source if the usage condition of the material added by the overall cumulative addition performing unit reaches a usage limit condition for the material. The managing device includes a material-order receiving unit that receives an order for the material.

To solve the problems as described above and achieve the object, an order management method according to the present invention includes a making-up step in which a communication network is made up of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a reagent supplying source; an analysis history storing step in which the automatic analyzer stores history information of an analysis period, a specimen count, and an analysis item of analysis performed in past; a usage quantity estimating step in which the automatic analyzer estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating step in which the automatic analyzer calculates a current reagent remaining quantity; an upcoming-remaining-quantity calculating step in which the automatic analyzer calculates a post-upcoming-analysis reagent remaining quantity by subtracting the usage quantity of the reagent estimated in the usage quantity estimating step from the current reagent remaining quantity calculated in the current-remaining-quantity calculating step; a reagent ordering step in which the automatic analyzer manages the remaining quantity of the reagent, and the automatic analyzer places an order for the reagent to a reagent supplying source if the reagent remaining quantity calculated in the upcoming-remaining-quantity calculating step is a positive value; and a receiving step in the managing device that includes receiving an order for the reagent from the automatic analyzer.

In the order management method according to the present invention, the order management method includes a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing reagent ordering, and a communication network is made up between the host apparatus and a managing device functioning as a reagent supplying source; an analysis history storing step in which each of the automatic analyzers stores history information of an analysis period, a specimen count, and an analysis item of analysis performed in past; a usage quantity estimating step in which each of the automatic analyzers estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period; a current-remaining-quantity calculating step in which each of the automatic analyzers calculates a current reagent remaining quantity; an upcoming-remaining-quantity calculating step in which each of the automatic analyzers calculates a post-upcoming-analysis reagent remaining quantity by subtracting the usage quantity of the reagent estimated in the usage quantity estimating step from the current reagent remaining quantity calculated in the current-remaining-quantity calculating step; a notifying step in which each of the automatic analyzers notifies the host apparatus of the reagent remaining quantity calculated in the upcoming-remaining-quantity calculating step; a reagent ordering step in which the host apparatus manages the reagent quantity, and the host apparatus calculates an overall remaining quantity by adding the reagent remaining quantities notified by the respective automatic analyzers if the overall remaining quantity is a positive value; and an order receiving step in which the managing device receives an order for the reagent from the host apparatus.

In the order management method according to the present invention, the order management method further includes an information reading step in which each of the automatic analyzers reads a reagent quantity of stocked reagent. The current-remaining-quantity calculating step includes calculating a current reagent remaining quantity that includes the reagent quantity of the reagent read.

In the order management method according to the present invention, the order management method includes a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing material ordering, and a communication network is made up between the host apparatus and a managing device functioning as a reagent supplying source; an analysis history storing step in which each of the automatic analyzers stores history information of an analysis period, a specimen count, and an analysis item of analysis performed in past and any one of usage conditions including a usage quantity, a usage time, and a usage count of a material used in the analysis performed in past; a usage quantity estimating step in which each of the automatic analyzers estimates, based on the history information of an analysis period corresponding to a period required for upcoming analysis, a usage condition of the material for the upcoming analysis by adding, for each material, a usage condition of the material specified in an analysis item in the history information; an adding step in which each of the automatic analyzers performs, for each material, cumulative addition of a usage condition of the material including the usage condition of the material estimated by the usage quantity estimating unit; a warning step in which each of the automatic analyzers issues a warning notice if the usage condition of the material added in the adding step reaches a usage limit condition for the material; and a material ordering step in which the usage condition of the material is managed, a warning notice is issued and an order for the material to a material supplying source is placed if the usage condition of the material cumulatively added by the adding unit reaches a usage limit condition for the material.

In the order management method according to the present invention, the order management system includes a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing material ordering, and a communication network is made up between the host apparatus and a managing device functioning as a material supplying source; an analysis history storing step in which each of the automatic analyzers stores history information of an analysis period, a specimen count, and an analysis item of analysis performed in past and any one of usage conditions including a usage quantity, a usage time, and a usage count of a material used in the analysis performed in past; a usage condition estimating step in which each of the automatic analyzers estimates, based on the history information of an analysis period corresponding to a period required for upcoming analysis, a usage condition of the material for the upcoming analysis by adding, for each material, a usage condition of the material specified in an analysis item in the history information; an adding step in which each of the automatic analyzers performs, for each material, cumulative addition of a usage condition of the material including the usage condition of the material estimated in the usage condition estimating step; and a notifying step in which each of the automatic analyzers notifies the host apparatus of the usage condition of the material added in the adding step, the host apparatus managing the usage condition of the material.

### EFFECT OF THE INVENTION

In an automatic analyzer, an order management system, and an order management method according to the present invention, history information of an analysis period, a specimen count, and an analysis item of analysis performed in past is stored. Based on the history information of an analysis period corresponding to a period required for upcoming analysis, the product of a usage quantity of a reagent specified in an analysis item in the history information and a specimen count in the analysis period is calculated to estimate a usage quantity of the reagent for the upcoming analysis, and a current reagent remaining quantity is also calculated. The management of the reagent remaining quantity is performed in such a way that a post-upcoming-analysis reagent remaining quantity is calculated by subtracting the usage quantity of the reagent estimated by the automatic analyzer from the reagent remaining quantity, and an order for reagents is placed if the post-upcoming-analysis reagent remaining quantity is a positive value. That allows optimal order management and inventory management for reagents according to the usage quantity. As a result, it becomes possible to reduce the time consumed in performing order management or inventory management and further reduce the efforts needed to be taken by the operator.

Moreover, in the automatic analyzer, the order management system, and the order management method according to the present invention, history information of an analysis period, a specimen count, and an analysis item of analysis performed in past and any one of usage conditions including a usage quantity, a usage time, and a usage count of a material used in the analysis performed in past is stored. Based on the history information of an analysis period corresponding to a period required for upcoming analysis, a usage condition of the material specified in an analysis item in the history information is added for each material to estimate a usage condition of the material for the upcoming analysis. Then, for each material, usage conditions of the material including the estimated usage condition of the material are cumulatively added. If the usage condition of the material obtained by addition by the automatic analyzer reaches a usage limit condition for the material, the management of the usage condition for the material is performed in such a way that a warning notice is issued and an order for the material to a material supplying source is placed. That allows optimal order management and inventory management for materials according to the usage quantity. As a result, it becomes possible to reduce the time consumed in performing order management or inventory management and further reduce the efforts needed to be taken by the operator.

### BRIEF DESCRIPTION OF DRAWINGS

FIG. 1 is a configuration diagram for explaining a schematic configuration of an order management system according to a first embodiment of the present invention.
FIG. 2 is a front view of a configuration of an automatic analyzer according to the first embodiment of the present invention.
FIG. 3 is a plan view of a configuration of a specimen supplying unit and an analyzing unit.
FIG. 4 is a conceptual perspective diagram of the configuration of the specimen supplying unit and the analyzing unit.
FIG. 5 is a schematic diagram of a configuration of a specimen dispensing unit according to the first embodiment of the present invention.
FIG. 6 is a block diagram of the configuration of the automatic analyzer according to the first embodiment of the present invention.
FIG. 7 shows a makeup of reagent history information stored in a managing database.
FIG. 8 shows a makeup of reagent-remaining-quantity information stored in the managing database.
FIG. 9 shows a makeup of material history information stored in the managing database.
FIG. 10 shows a makeup of common-materials usage information stored in the managing database.
FIG. 11 is a flowchart for explaining an analysis initiating procedure in the automatic analyzer according to the first embodiment of the present invention.
FIG. 12 is a flowchart for explaining an analysis resuming procedure in the automatic analyzer according to the first embodiment of the present invention.
FIG. 13 is a flowchart for explaining an operation of calculating reagent remaining quantity in the automatic analyzer according to the first embodiment of the present invention.
FIG. 14 is a flowchart for explaining an operation of reagent ordering performed by a reagent managing unit according to the first embodiment of the present invention.
FIG. 15 is a flowchart for explaining an operation of calculating material usage condition in the automatic analyzer according to the first embodiment of the present invention.
FIG. 16 is a flowchart for explaining an operation of material ordering performed by a common-materials managing unit according to the first embodiment of the present invention.
FIG. 17 is a flowchart for explaining an order reception managing procedure performed by a managing device according to the first embodiment of the present invention.
FIG. 18 is a configuration diagram for explaining a schematic configuration of an order management system according to a second embodiment of the present invention.
FIG. 19 is a flowchart for explaining an order managing procedure in a host apparatus according to the second embodiment of the present invention.

### EXPLANATIONS OF LETTERS OR NUMERALS

1, 1a to 1c Automatic analyzer
2 Specimen supplying unit
3 Analyzing unit
4 Data processing device
5, 56 Control unit
6 Information reading device
7 Notifying device
8 Detergent tank
10 Managing device
11, 44, 57 Communication interface
12, 40, 52 Data processing unit
12a Order receiving unit
13, 43, 55 Managing database
15 Public line network
16 IPsec network
31 Reaction tank
313 Cuvette wheel
32 First cool reagent-container
323 Barcode reader
33 Second cool reagent-container
333 Barcode reader
34 Specimen dispensing unit
342a Pressure sensor
342e Syringe
342c Fluid level sensor
342d Ferista tube
342g Usage count detecting unit
35 First reagent dispensing unit
352a Pressure sensor
36 Second reagent dispensing unit
362a Pressure sensor
39 Cleaning/drying unit
39a Cleaning count detecting sensor
40a Usage quantity estimating unit
40b Current-remaining-quantity calculating unit
40c Upcoming-remaining-quantity calculating unit
40d Material usage estimating unit
40e Cumulative addition performing unit
43a Reagent history information
43b Reagent remaining quantity
43c Material history information
45 Reagent managing unit
45a Reagent ordering unit
46, 57 Common-materials managing unit
46a, 57a Material ordering unit
50 Host apparatus
52a Overall reagent-remaining-quantity estimating unit
52b Overall cumulative addition performing unit
B Reagent bottle
C Cuvette

### BEST MODE(S) FOR CARRYING OUT THE INVENTION

Exemplary embodiments for an automatic analyzer, an order management system, and an order management method according to the present invention will be described below in detail with reference to the accompanying drawings. The present invention is not limited to the embodiments.

The automatic analyzer according to an embodiment of the present invention is applicable to an automatic analyzer that performs analysis such as biochemical analysis and immunological tests in an automatic manner. Herein, the description is given with reference to a biochemical analyzer that is used in, for example, clinical examination.

### First embodiment

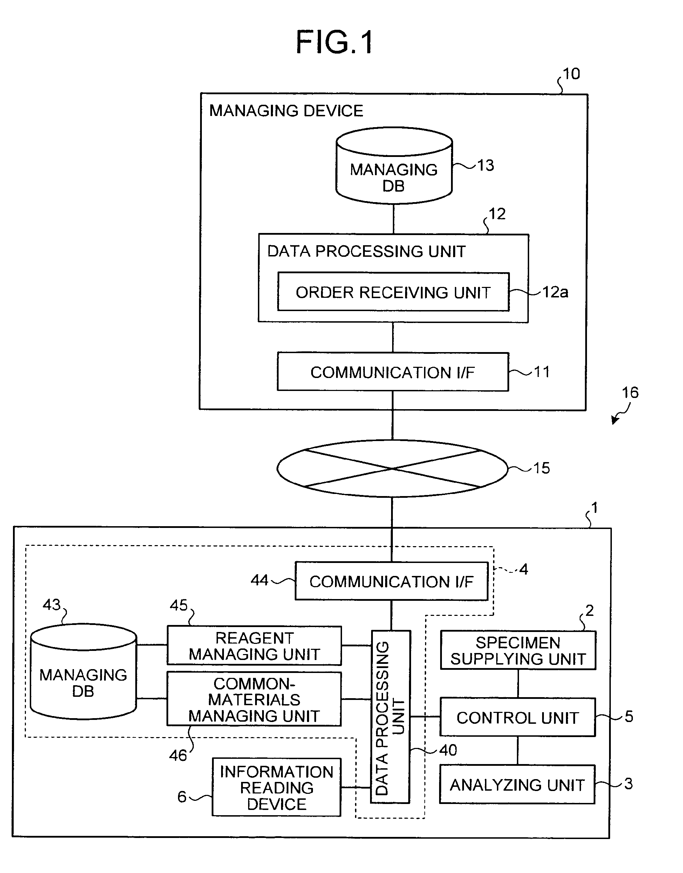

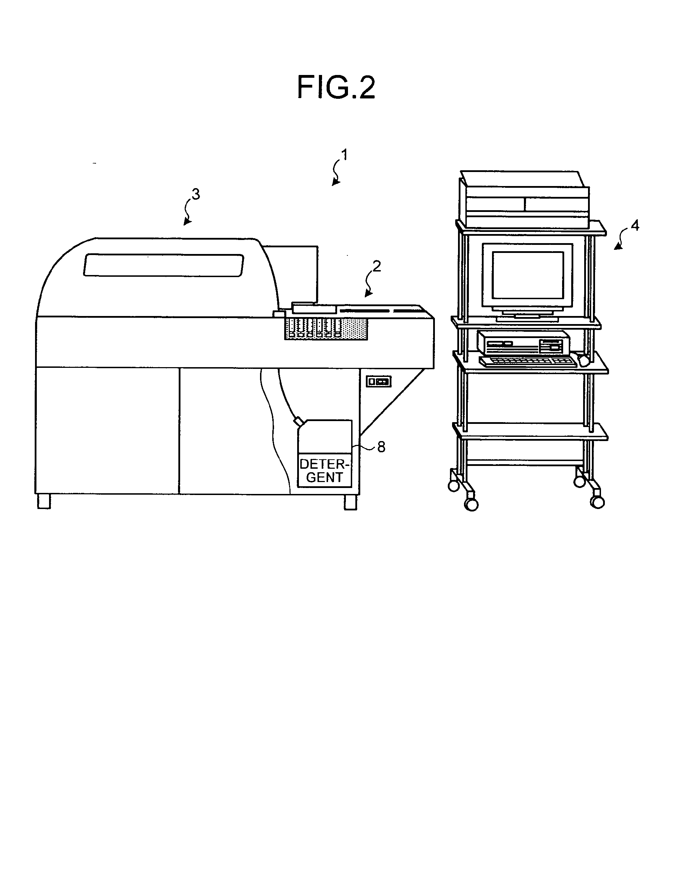

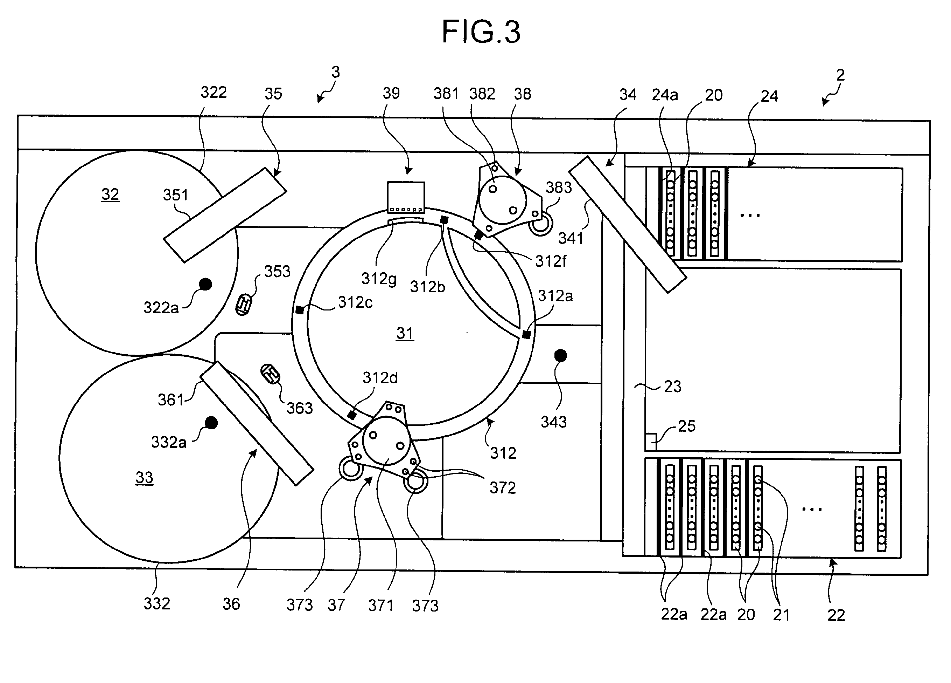

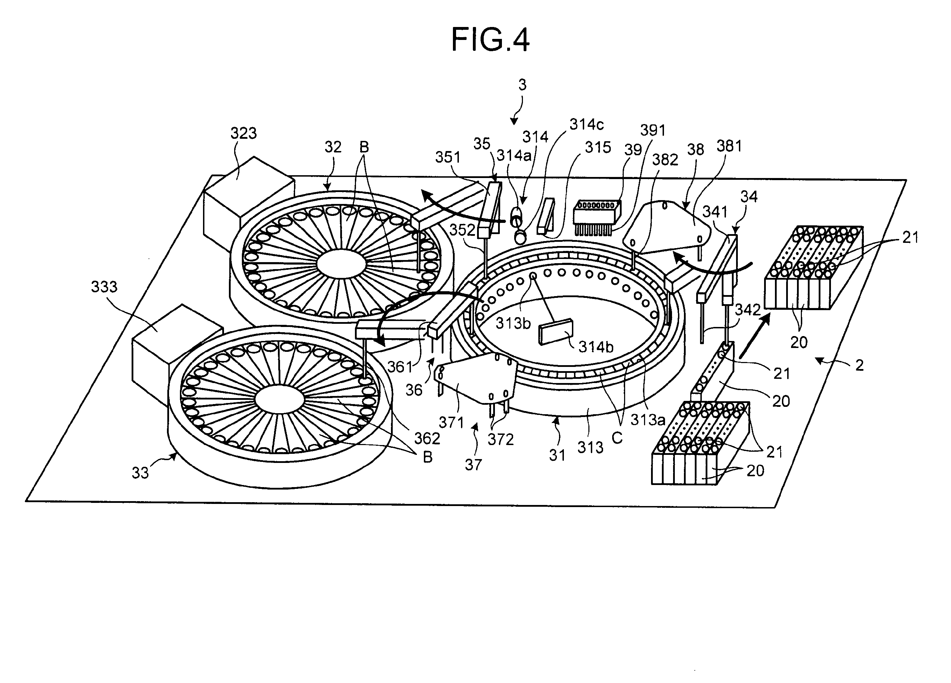

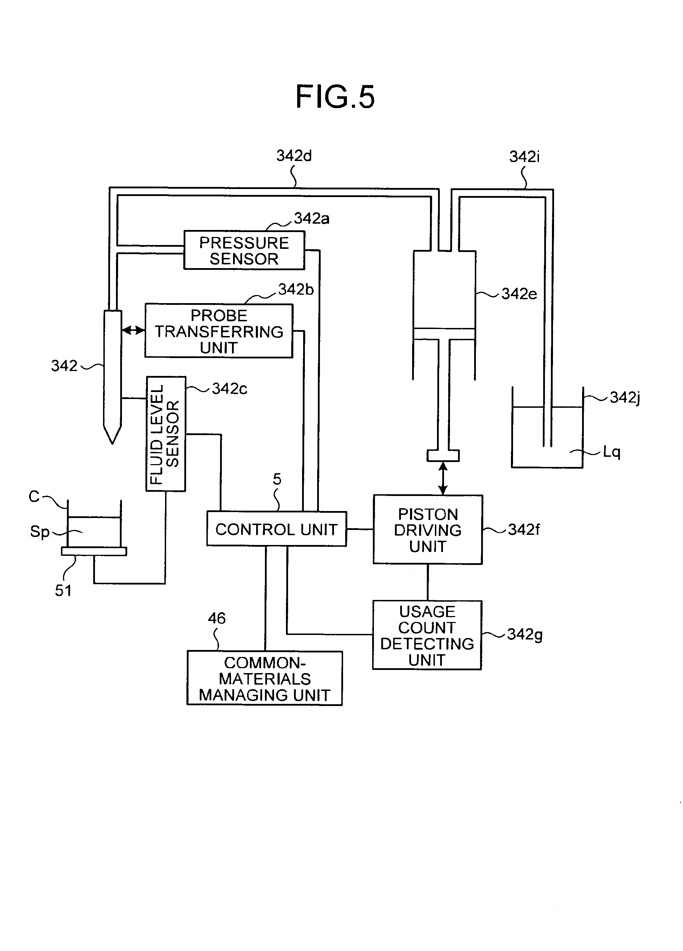

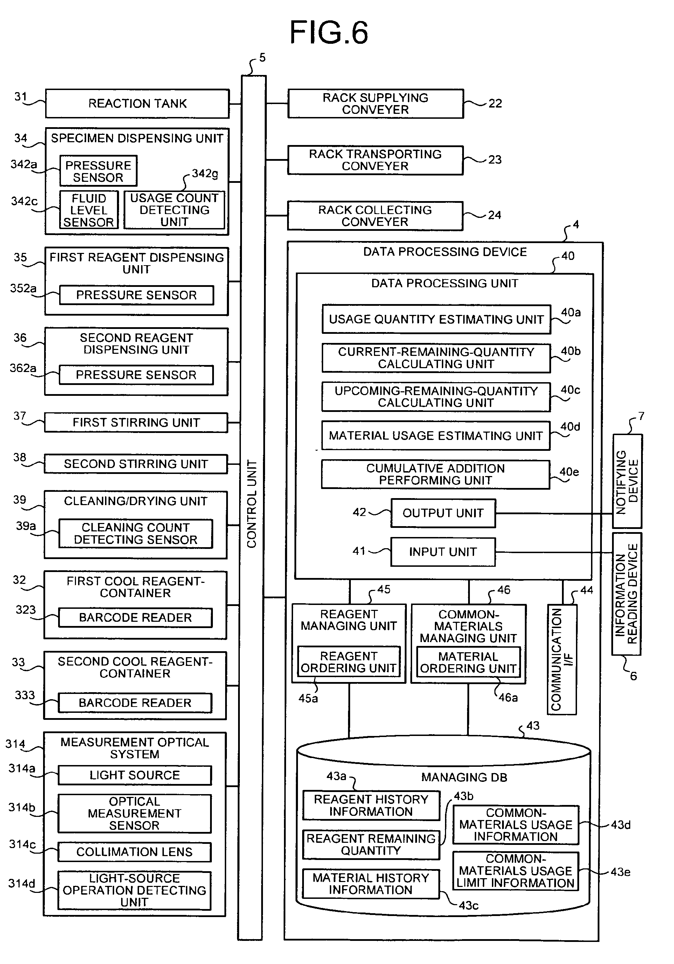

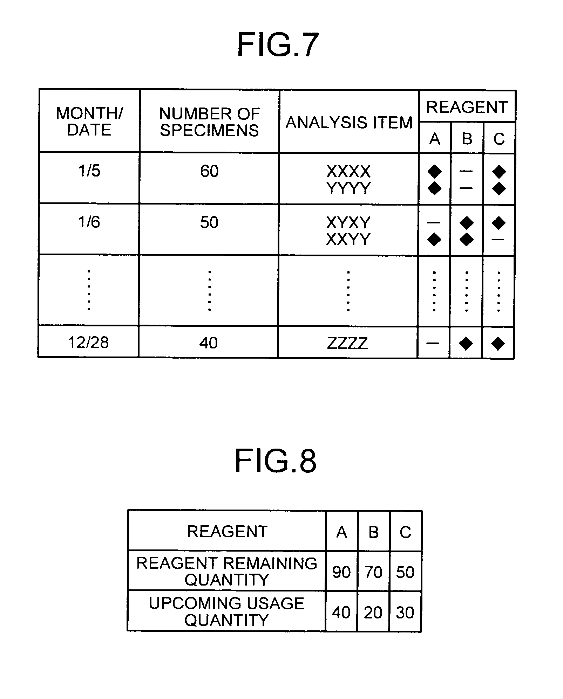

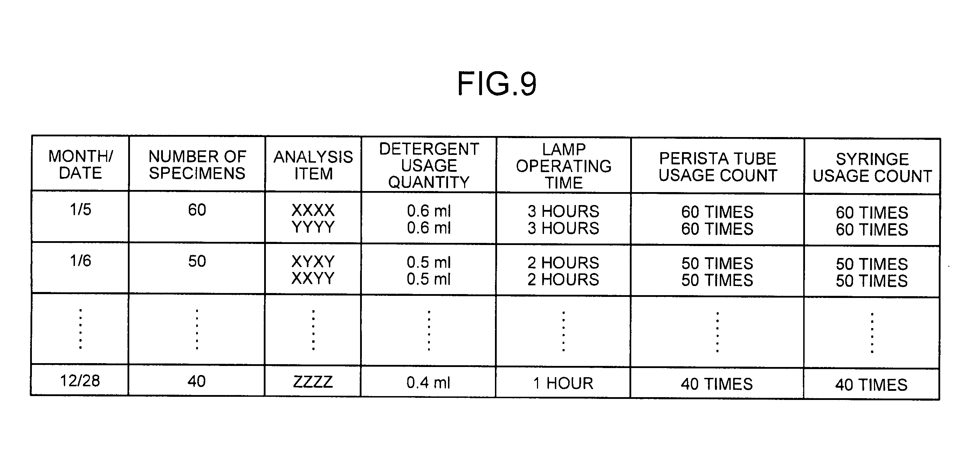

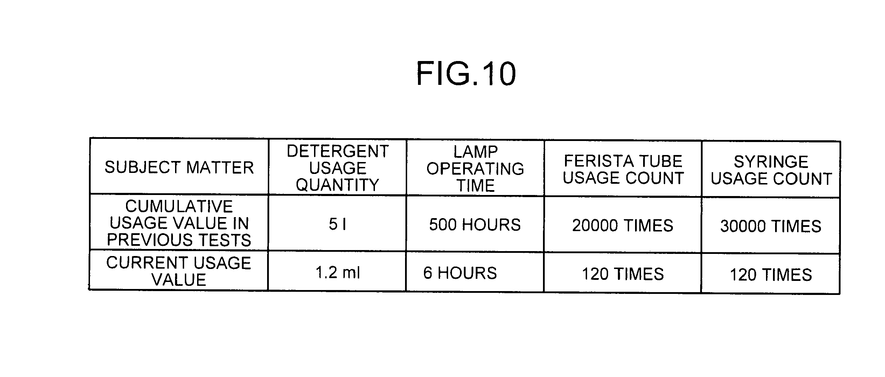

A configuration of an automatic analyzer according to a first embodiment of the present invention is described below with reference to FIGS. 1 to 10. FIG. 1 is a configuration diagram for explaining a schematic configuration of an order management system according to the first embodiment of the present invention. FIG. 2 is a front view of the configuration of the automatic analyzer according to the first embodiment of the present invention. FIG. 3 is a plan view of a configuration of a specimen supplying unit and an analyzing unit. FIG. 4 is a conceptual perspective diagram of the configuration of the specimen supplying unit and the analyzing unit. FIG. 5 is a schematic diagram of a configuration of a specimen dispensing unit according to the first embodiment of the present invention. FIG. 6 is a block diagram of the configuration of the automatic analyzer according to the first embodiment of the present invention. FIG. 7 shows a makeup of reagent history information stored in a managing database. FIG. 8 shows a makeup of reagent-remaining-quantity information stored in the managing database. FIG. 9 shows a makeup of material history information stored in the managing database. FIG. 10 shows a makeup of common-materials usage information stored in the managing database.

In the order management system according to the first embodiment as shown in FIG. 1, an automatic analyzer 1 that performs specimen analysis is connected to a managing device 10 that functions as a reagent supplying source via a public line network 15 to form, for example, a communication network of IPsec (IPsec network) 16. The security function of the IPsec is used to enable communication of encrypted data at the time of reagent ordering between the automatic analyzer 1 and the managing device 10.

As shown in FIG. 1, the automatic analyzer 1 includes a specimen supplying unit 2, an analyzing unit 3, a data processing device 4, a control unit 5, and an information reading device 6. As shown in FIG. 2, the specimen supplying unit 2 can successively supply racks 20 each with sampling tubes 21 (e.g., blood collecting tubes) to the analyzing unit 3. The racks 20 according to the first embodiment can each store ten sampling tubes 21 and allow 150 specimens to be set in the specimen supplying unit 2. Each sampling tube 21 contains a collected specimen (e.g., blood sample). A barcode label (not shown) used for specimen identification is applied on the face of the sampling tube 21. The barcode label shows information regarding the specimen. Meanwhile, in a housing unit in the bottom portion of the analyzing unit 3 is disposed a detergent tank 8 containing a detergent liquid that can be withdrawn into a syringe to clean the cuvettes.

As shown in FIG. 3, the specimen supplying unit 2 includes a rack supplying conveyer 22, a rack transporting conveyer 23, and a rack collecting conveyer 24. The rack supplying conveyer 22 includes a plurality of L-shaped attachments 22a disposed orthogonal to a rack transporting direction. The racks 20 can be disposed between the attachments 22a. As a result, the racks 20 get lined up on the rack supplying conveyer 22, are supported by the attachments 22a and thus are prevented from falling.

As shown in FIG. 3, the rack transporting conveyer 23 is made up of a conveyer that transports each rack 20 to a specimen supplying position. The rack transporting conveyer 23 can transport the racks 20 in an intermittent manner and transport the sampling tubes 21 in each rack 20 to the specimen supplying position in a successive manner. A barcode reader 25 is disposed at the upstream side in the rack transporting direction of the rack transporting conveyer 23, and can obtain the information of the specimen contained in the sampling tube 21 to be transported to the specimen supplying position.

As shown in FIG. 3, the rack collecting conveyer 24 includes, in an identical manner to the rack supplying conveyer 22, a plurality of L-shaped attachments 24a disposed orthogonal to a rack transporting direction. The racks 20 transported by the rack transporting conveyer 23 get disposed between the attachments 24a for collection. The collected racks 20 get lined up on the rack collecting conveyer 24, are supported by the attachments 24a and thus are prevented from falling.

As shown in FIGS. 3 and 4, the analyzing unit 3 includes a reaction tank 31, a first cool reagent-container 32, and a second cool reagent-container 33. The reaction tank 31 is disposed in the substantially central portion of the analyzing unit 3. Moreover, the reaction tank 31 includes a warming unit (not shown) and a temperature sensor (not shown) and is covered by a disk-like lid 312. The reaction tank 31 functions as a constant-temperature oven in which the internal temperature is maintained substantially equal to the human body temperature (in the vicinity of 37°C). Furthermore, as shown in FIG. 4, the reaction tank 31 includes a cuvette wheel 313 and a measurement optical system 314 that can be used to obtain an analysis result from the absorbance of a test liquid (a mixed liquid of the reagent and the specimen).

The cuvette wheel 313 is a circular ring-like member that can rotate in an intermittent manner. On the substantially central portion in the radially outward direction of the cuvette wheel 313, housing recesses 313a are arranged equidistantly along the circumferential direction (hereinafter, the equal distance is referred to as one pitch). Moreover, on the inner surface and the outer surface of the cuvette wheel 313 are created optical measurement windows 313b that pass through the housing recesses 313a and that are used to guide a light beam from the outside of the cuvette wheel 313 to the inside thereof. In the housing recesses 313a, reaction vessels called cuvettes (hereinafter, "cuvettes C") are housed. Each cuvette C is a transparent and rectangular tube-like vessel having an opening on the top. A light beam from the outside of the cuvette wheel 313 passes through the cuvettes C and is guided to the inside of the cuvette wheel 313.

At a position on the outside of the cuvette wheel 313 is disposed a light source 314a that emits light in the radially inward direction of the cuvette wheel 313. An optical measurement sensor 314b is so disposed that it lies in alignment to the line linking the light source 314a and a target cuvette for analysis. The light source 314a emits light for analyzing the test liquid obtained by reaction of the reagent and the specimen in a cuvette C. The optical measurement sensor 314b performs optical measurement of the parallel light that has passed through the test liquid in a cuvette C and through the corresponding optical measurement windows 313b. The light source 314a and the optical measurement sensor 314b are a part of the measurement optical system 314.

Apart from the light source 314a and the optical measurement sensor 314b, the measurement optical system 314 includes a collimation lens 314c that is disposed at a position on the outside of the cuvette wheel 313, a filter (not shown) that is disposed at a position on the inside of the cuvette wheel 313, and a light-source operation detecting unit 314d that detects the operation of the light source 314a. The collimation lens 314c gathers the light emitted by the light source 314a into parallel light. The filter is an optical filter that selects light of a particular wavelength absorbable by the test liquid. The filter to be disposed is determined in advanced for each measurement item. The light-source operation detecting unit 314d is disposed near the light source 314a and, during the period when light emitted by the light source 314a is being detected, continuously outputs an electric signal of a predetermined level. The control unit 5 includes, for example, a timer that counts the time for which the electric signal is being output. Thus, the control unit 5 uses the timer to detect the operating time of the light source 314a.

The cuvette wheel 313 rotates for (1 circle - 1 pitch)/4 (hereinafter, "one cycle") in 4.5 seconds in the counterclockwise direction and, upon completing four cycles in 18 seconds, completes rotation of (1 circle - 1 pitch). As a result, the cuvettes C move by one pitch in the clockwise direction after every four cycles.

On the cuvette wheel 313, the position that is adjacent to the specimen supplying position is a first specimen dispensing position. The position substantially opposite to the first specimen dispensing position is a first reagent dispensing position. The position that lies in the clockwise direction from the first specimen dispensing position and that substantially splits the distance between the first specimen dispensing position and the first reagent dispensing position is a second reagent dispensing position. The position that lies in the counterclockwise direction from the first specimen dispensing position and that substantially splits the distance between the first specimen dispensing position and the first reagent dispensing position is a second specimen dispensing position. The position adjacent to the second reagent dispensing position in the counterclockwise direction is a first stirring position. The position adjacent to the second reagent dispensing position in the clockwise direction is a second stirring position. The position adjacent to the second specimen dispensing position in the counterclockwise direction is a cleaning/drying position.

As shown in FIG. 3, the lid 312 covering the reaction tank 31 has a first specimen dispensing hole 312a, a second specimen dispensing hole 312b, a first reagent dispensing hole 312c, a second reagent dispensing hole 312d, a first stirring hole (not shown), a second stirring hole 312f, and a cleaning hole 312g formed corresponding to the first specimen dispensing position, the second specimen dispensing position, the first reagent dispensing position, the second reagent dispensing position, the first stirring position, the second stirring position, and the cleaning/drying position, respectively.

As shown in FIG. 4, the first cool reagent-container 32 and the second cool reagent-container 33 are disposed on the left side of the reaction tank 31. The first cool reagent-container 32 and the second cool reagent-container 33 include a cooling unit (not shown) and a temperature sensor (not shown) and are covered by disk-like lids 322 and 332, respectively. Thus, the first cool reagent-container 32 and the second cool reagent-container 33 function as cool containers in which the internal temperature is maintained below a predetermined temperature. Moreover, each of the first cool reagent-container 32 and the second cool reagent-container 33 includes a turntable (not shown).

The turntable can rotate in an intermittent manner. A plurality of dividers is disposed on the top face of the turntable. The dividers extend radially outward from the center of the turntable and are detachable with a single touch. Thus, it is possible to define the turntable having arbitrary regions.

As shown in FIG. 4, each turntable houses a plurality of reagent bottles B that are kept open. Each reagent bottle B contains a predetermined reagent corresponding to a test item. A barcode label (not shown) for reagent identification is applied on the outer face of each reagent bottle B. The barcode label shows information of the corresponding reagent in an encoded form. The reagent information includes, for example, the reagent type, the manufacturing lot number, the calibration value, the calibration curve, the expiration date, and the reagent quantity. Meanwhile, a barcode label is also applied to the outer packaging containing the reagent bottles B.

The first cool reagent-container 32 and the second cool reagent-container 33 include barcode readers 323 and 333, respectively, that read the barcode labels of the reagent bottles B and obtain the information regarding the reagents filled in the reagent bottles B. Thus, it is possible for the turntables to transfer an arbitrary reagent bottle B at an arbitrary timing to corresponding reagent supplying positions.

As shown in FIG. 3, the lid 322 covering the first cool reagent-container 32 has a first reagent hole 322a and the lid 332 covering the second cool reagent-container 33 has a second reagent hole 332a at the corresponding reagent supplying position.

The analyzing unit 3 includes a specimen dispensing unit 34, a first reagent dispensing unit 35, and a second reagent dispensing unit 36. The specimen dispensing unit 34 dispenses a predetermined quantity of a specimen from the sampling tube 21 that has been transferred to the specimen supplying position to a cuvette C. As shown in FIG. 5, the specimen dispensing unit 34 includes a thin tube-like probe 342 made of a conductive material such as a metal, a probe transferring unit 342b that transfers the probe 342 by making it to move up and down in vertical direction or rotate in horizontal direction, an electrode 51 that contains a fluid sample Sp and that is disposed near the cuvettes C, a fluid level sensor 342c that detects the fluid level of the sample Sp by detecting the change in the capacitance between the probe 342 and the electrode 51, a pressure sensor 342a that detects the change in pressure occurring inside the probe 342 when an end portion of the probe 342 comes in contact with the fluid level of the sample Sp, a piston driving unit 342f that piston-drives a syringe 342e, a usage count detecting unit 342g that detects the usage count of the syringe 342e, and the control unit 5 that is equipped with, for example, a CPU (central processing unit) to control the operations of the specimen dispensing unit 34.

An arm 341 is disposed to be movable in a rotational manner and movable up and down in vertical direction between the specimen supplying position and the first specimen dispensing position and between the specimen supplying position and the second specimen dispensing position. The probe 342 is used for specimen suction and is connected to the syringe 342e via a replaceable Ferista tube 342d. The syringe 342e sucks in a cleaning liquid Lq from a cleaning tank 342j through a Ferista tube 342i such that the probe 342 can be cleaned from inside. The fluid level sensor 342c detects the fluid level of a specimen filled in the sampling tube 21 by monitoring the capacitance when the arm 341 makes downward movement.

The probe 342 is connected to the pressure sensor 342a that verifies whether a predetermined quantity of the specimen has been sucked in. For that verification, the pressure sensor 342a monitors the change in pressure during the suction process (see FIG. 5). Verification of specimen suction is possible by using the facts that absence of the sampling tube 21 causes the pressure to fall below the pressure during specimen suction and clogging of the probe 342 causes the pressure to rise above the pressure during specimen suction. Meanwhile, on the trajectory that links the specimen supplying position and the first specimen dispensing position is disposed a cleaning unit 343 (see FIG. 3). Cleaning water is supplied to the cleaning unit 343 from the cleaning tank 342j for cleaning the probe 342. The usage count detecting unit 342g detects driving of the syringe 342e by the piston driving unit 342f and, for example, outputs an electric signal each time there is reciprocating piston motion. The control unit 5 imports the electric signal and counts the time for which the electric signal is output to detect the usage count of the Ferista tube 342d and the syringe 342e.

Each of the first reagent dispensing unit 35 and the second reagent dispensing unit 36 dispenses a predetermined quantity of a reagent from a reagent bottle B that has been transferred to the corresponding reagent supplying position to a cuvette C. In an identical manner to the specimen dispensing unit 34, the first reagent dispensing unit 35 includes an arm 351 and a probe 352; while the second reagent dispensing unit 36 includes an arm 361 and a probe 362. Each of the arms 351 and 361 is movable in a rotational manner and movable up and down in vertical direction between the corresponding reagent supplying position and the corresponding reagent dispensing position. The probes 352 and 362 are used for reagent suction and to detect the fluid level of the reagents filled in the reagent bottles B by monitoring the capacitance when the arms 351 and 361 make downward movement. Each of the probes 352 and 362 includes a suction verification unit that verifies whether a predetermined quantity of the reagent has been sucked in. The suction verification units are a pressure sensor 352a in the probe 352 and a pressure sensor 362a in the probe 362 (see FIG. 6) that monitor the change in pressure during reagent suction. Verification of reagent suction is possible by using the facts that, when the reagent runs short, the pressure falls below the pressure during reagent suction and, when the probe 352 or the probe 362 gets clogged, the pressure rises above the pressure during reagent suction. Meanwhile, on the trajectories that link the reagent supplying positions and the reagent dispensing positions are disposed cleaning units 353 and 363 (see FIG. 3). Cleaning water is supplied to the cleaning units 353 and 363 from cleaning tanks (not shown) for cleaning the probes 352 and 362, respectively.

The analyzing unit 3 further includes a first stirring unit 37 and a second stirring unit 38 that stir the mixed liquid (specimen and reagent) in a cuvette C that has been transferred to the first stirring position and the second stirring position, respectively, to drive the reaction. The first stirring unit 37 includes a rotating arm 371 and a stir bar 372, while the second stirring unit 38 includes a rotating arm 381 and a stir bar 382. The rotating arms 371 and 381 can rotate (revolve) and move up and down in vertical direction and have a substantial triangular shape in planar view. The stir bars 372 and 382 are disposed near the apex of the rotating arms 371 and 381, respectively, and are rotatable (autorotatable) independent of the rotating arms 371 and 381, respectively. On the orbital trajectory of the stir bars 372 and 382 are disposed cleaning units 373 and 383, respectively (see FIG. 3). The cleaning units 373 and 383 receive cleaning liquid from the detergent tank 8 shown in FIG. 2 and cleaning water from a cleaning tank (not shown) for cleaning the stir bars 372 and 382, respectively.

The analyzing unit 3 further includes a cleaning/drying unit 39 that can move up and down in vertical direction for every four cycles, i.e., for each rotation of (1 circle - 1 pitch) of the cuvette wheel 313. The cleaning/drying unit 39 includes a plurality of nozzles 391 that are of different types such as suction nozzles for sucking in the analyzed specimen from the cuvettes, cleaning nozzles for supplying a detergent liquid or a cleaning liquid to the cuvettes, suction nozzles for sucking in the cleaning liquid from the cuvettes, and air nozzles for supplying compressed air to the cuvettes. Moreover, the cleaning/drying unit 39 includes a cleaning count detecting sensor 39a for detecting the cleaning count and outputs an electric signal to the control unit 5 each time cleaning is performed. The control unit 5 imports and counts the electric signal to detect the cleaning count.

All constituent elements in the specimen supplying unit 2 and the analyzing unit 3 are connected to the control unit 5 that can perform block control by using, for example, a microcomputer. The control unit 5 controls the operations of each constituent element in the automatic analyzer 1 and also controls the analyzing unit 3 such that the analyzing process is regulated when the manufacturing lot or the expiration date of a reagent is outside the setting range.

As shown in FIG. 6, the data processing device 4 (hereinafter, "DPR 4") is connected to the control unit 5. The DPR 4 includes a data processing unit 40 that performs data processing, a managing database 43 (analysis history storing unit) that is used to store history information, a communication interface 44, a reagent managing unit 45 that performs reagent order management, and a common-materials managing unit 46 that performs material order management. The data processing unit 40 includes a usage quantity estimating unit 40a (usage quantity estimating means), a current-remaining-quantity calculating unit 40b (current-remaining-quantity calculating means), an upcoming-remaining-quantity calculating unit 40c (upcoming remaining quantity calculating means), a material usage estimating unit 40d (usage condition estimating means), a cumulative addition performing unit 40e (adding means), an input unit 41, and an output unit 42. The data processing unit 40 processes a variety of data obtained by the control unit 5 and input from the input unit 41. The input unit 41 is, for example, a keyboard or a mouse that can be used to input a variety of information such as the specimen count and the test items. The test items can be input on an individual basis or as a part of a broad classification such as standard test items and extensive test items. Meanwhile, the input unit 41 is connected to the information reading device 6 (described later). The output unit 42 is, for example, a display panel or a printer that can be used to output a variety of information such as the details of analysis including analysis results or warning notices. Moreover, the output unit 42 is connected to a notifying device 7 (described later).

The data processing unit 40 is connected to the managing database 43, the communication interface 44, the reagent managing unit 45, and the common-materials managing unit 46. The managing database 43 is used to store reagent history information 43a that is the history information of reagents used in past analysis, reagent remaining quantity 43b that is the information of the current remaining quantity of each reagent, material history information 43c that is the history information of materials used in past analysis, common-materials usage information 43d that is the information of the current usage status of each material, and common-materials usage limit information 43e that indicates the usage limit for each material.

The information in the reagent remaining quantity 43b indicates the type and the remaining quantity of reagents specified for each analysis item. The reagent history information 43a includes, as shown in FIG. 7, the specimen count and the analysis items corresponding to each date. Thus, for example, it is possible to refer to the specimen count and the analysis items used on the same date of the previous year or refer to reagents A to C specified for a particular test item. As shown in FIG. 8, the information on the remaining quantity of reagents includes the current remaining quantity of each of the reagents A to C (reagent remaining quantity) and the quantity of the reagents A to C to be used in the upcoming analysis (upcoming usage quantity). The reagent remaining quantity is a value calculated by the current-remaining-quantity calculating unit 40b and the upcoming usage quantity is the actual reagent usage quantity estimated by the usage quantity estimating unit 40a. The material history information 43c includes, as shown in FIG. 9, the specimen count, the analysis items, the detergent liquid usage quantity for each analysis item, the lamp (light source) operating time, the Ferista tube usage count, and the syringe usage count. In an identical manner to the reagent history information 43a, the material history information 43c can also be used to refer to the specimen count and the analysis items used on, for example, the same date of the previous year.

For a single testing of a single specimen, the detergent liquid usage quantity is about 0.01 ml and the lamp operating time is about three minutes. The common-materials usage information 43d includes, as shown in FIG. 10, a cumulative usage value for each material in previous tests and a current usage value for each material. When the current testing (e.g., testing for one day) is complete the cumulative addition performing unit 40e adds the current usage value to the cumulative usage value. When a material is newly received and when the information reading device 6 reads the information of the newly received material, the cumulative usage value is reset. Meanwhile, the history information can include information of the specimen count and the analysis items corresponding to dates, include referable information of the specimen count and the analysis items of the previous day, or include referable information of the specimen count and the analysis items per day in a particular season. The managing database 43 additionally includes a variety of data such as information on reagents necessary for analysis (including stock information (described later) read by the information reading device 6), data of estimated remaining reagent quantity, and data of purchase orders.

As shown in FIG. 1, the communication interface 44 performs data communication with the managing device 10, which functions as the reagent supplying source, via the IPsec network 16. The communication interface 44 encrypts purchase orders generated in a reagent ordering program (described later) and sends the encrypted purchase orders to the managing device 10 functioning as the reagent supplying source.

The reagent managing unit 45 includes a reagent ordering unit 45a (reagent ordering means) that performs order management of reagents assessed by the data processing unit 40. When the value of the estimated remaining reagent quantity calculated by the upcoming-remaining-quantity calculating unit 40c becomes negative, i.e., when the reagent usage quantity is less than the overall reagent remaining quantity, the reagent managing unit 45 instructs the notifying device 7 to issue a warning notice and instructs the communication interface 44 to, for example, perform communication for reagent ordering to the reagent supplying source. The common-materials managing unit 46 includes a material ordering unit 46a that performs order management of each material assessed by the data processing unit 40. When the cumulative usage value obtained by the cumulative addition performing unit 40e exceeds a predetermined threshold value of a usage limit condition (detergent liquid usage quantity, lamp operating time, Ferista tube usage count, and syringe usage count), the common-materials managing unit 46 instructs the notifying device 7 to issue a warning notice and instructs the communication interface 44 to, for example, perform communication for reagent ordering to the reagent supplying source.

The information reading device (information reading means) 6 is detachably attached to the data processing unit 40 via the input unit 41. The information reading device 6 is, for example, a barcode reader that reads a barcode label applied to the outer packaging of stocked reagents and obtains information regarding the reagents filled in the reagent bottles. The obtained information is output to the data processing unit 40. Subsequently, the data processing unit 40 stores the information on the stocked reagent quantity as stock information (inventory information) in the managing database 43. During analysis in the automatic analyzer 1, when a reagent bottle is determined to be empty, it is replaced with a new reagent bottle and that information is obtained. Then, the data processing unit 40 performs a dispatch entry for that empty reagent bottle from the stored inventory information. The information reading device 6 also reads the barcode label applied on the outer packaging of stocked materials and stores the read information as stock information (inventory information) in the managing database 43.

Given below is the description of each constituent element of the data processing unit 40. The usage quantity estimating unit 40a includes a program for usage quantity estimation and estimates the reagent usage quantity in upcoming analysis for each reagent by referring to the history information. More particularly, the history information of an analyzing period corresponding to the analyzing period of the upcoming analysis is obtained. For example, for the analyzing period (date) of the upcoming analysis, the reagent types are obtained from the analysis item in the corresponding analyzing period (same date of the previous year). Moreover, the past record of the reagent usage quantity is obtained by multiplying the specimen count used on that date of the previous year by their one-time dispensed quantity. In this way, it is possible to obtain the actual reagent usage quantity of each reagent on the same date of the previous year. Meanwhile, if the analyzing period corresponding to the analyzing period of the upcoming analysis is set to be the previous day, then the actual reagent usage quantity of the previous day can be obtained from the specimen count and the analysis item of the previous day. Moreover, if the history information to be referred to is set as, for example, days in a particular season, then the actual reagent usage quantity of each day in that season can be obtained from the specimen count and the analysis items per day. Similarly, if the history information to be referred to is set as, for example, weeks or months in a particular season, then the actual reagent usage quantity of each week or each month in that season can be obtained from the specimen count and the analysis items per week or per month.

The current-remaining-quantity calculating unit 40b includes a program for calculating the current remaining quantity of reagents (reagent remaining quantity). That process includes an operation to calculate the reagent remaining quantity for each reagent bottle B by subtracting the reagent quantity used in analysis from the reagent quantity filled in the reagent bottle B and an operation to calculate the overall reagent remaining quantity of identical-type reagents. In the operation to calculate the reagent remaining quantity for each reagent bottle B, the reagent quantity filled in a reagent bottle B is the quantity read by the barcode readers 323 and 333 from the barcode label applied on the outer face of that reagent bottle B. The reagent quantity of each reagent used in analysis can be calculated by multiplying the reagent quantity specified for each analysis item by the number of times for which analysis is performed. Thus, in this operation, the obtained data can be used to calculate the reagent remaining quantity for each reagent bottle B. Moreover, for each time the analysis is performed, the used reagent quantity is subjected to serial addition. Along with that, the reagent remaining quantity is also subjected to serial addition. The reagent remaining quantity provides a guideline for reagent restocking in the first cool reagent-container 32 and the second cool reagent-container 33. The reagent remaining quantity is displayed on the display panel, which functions as a display unit, for operator confirmation. Meanwhile, as described above, the data of the reagent remaining quantity is stored in the managing database 43.

In the operation to calculate the overall reagent remaining quantity of identical-type reagents, the initial value read at the time of stocking by the information reading device 6 from the barcode label applied on the outer packaging is used in calculating the overall reagent remaining quantity of the identical-type reagents. Herein, identical-type reagents indicate, for example, the reagents having the same type and manufacturing lot number. The automatic analyzer 1 includes a reagent storage container (not shown) and a reagent restocking device (not shown). The reagent storage container can be used to store the reagent bottles B containing the reagents to be restocked. When reagents are received in stock, the information reading device 6 reads the information regarding the reagents and then the reagents are once stored in the reagent storage container. The reagent restocking device collects empty reagent bottles B from the first cool reagent-container 32 and the second cool reagent-container 33 and restocks the first cool reagent-container 32 and the second cool reagent-container 33 with new reagent bottles B. In the calculation of the overall reagent remaining quantity, the reagent remaining quantity in each reagent bottle B and reagent replacement information indicating the replacement of reagent bottles is used. That is, in the operation to calculate the overall reagent remaining quantity, the reagent quantity in the replaced reagent bottles (quantity read by the barcode readers 323 and 333) is subtracted from the reagent quantity of the reagents read by the information reading device 6 and then the reagent remaining quantity in the reagent bottles is added to obtain the overall reagent remaining quantity of each reagent. The overall reagent remaining quantity provides a guideline for reagent ordering performed by the automatic analyzer 1. The overall reagent remaining quantity can be displayed on the display panel, which functions as a display unit, for operator confirmation. Moreover, as described above, the data of the overall reagent remaining quantity is also stored in the managing database 43.

The upcoming-remaining-quantity calculating unit 40c includes a program for calculating a post-upcoming-analysis reagent remaining quantity and calculates the post-upcoming-analysis reagent remaining quantity (estimated reagent remaining quantity) by subtracting the current overall reagent remaining quantity calculated by the current-remaining-quantity calculating unit 40b from the reagent usage quantity of each reagent estimated by the usage quantity estimating unit 40a. Herein, when the reagent usage quantity is larger than the overall reagent remaining quantity, the value of the estimated reagent remaining quantity becomes positive; and when the reagent usage quantity is smaller than the overall reagent remaining quantity, the value of the estimated reagent remaining quantity becomes negative. The estimated reagent remaining quantity is used by the reagent ordering unit 45a to determine whether it is necessary to place an order for the reagent.

The material usage estimating unit 40d estimates, based on the history information of an analyzing period corresponding to the analyzing period of the upcoming analysis, the usage conditions for materials to be used in the upcoming analysis by performing addition of the usage conditions for each material specified in the analysis items in the history information. More particularly, for example, for the analyzing period (month and day) of the upcoming analysis, a material usage condition such as a detergent usage quantity is obtained from the analysis items in the corresponding analyzing period (from the same month and day of the previous year to the next same month and day) and the usage conditions of same materials in those analyzing periods are added to obtain the past record of the usage condition for each material.

The cumulative addition performing unit 40e performs cumulative addition of the material usage conditions including the material usage conditions estimated by the material usage estimating unit 40d. That is, the cumulative addition performing unit 40e performs cumulative addition with respect to the previously accumulated material usage condition to calculate a cumulative usage value for each material. For example, the cumulative addition performing unit 40e adds a current usage value "1,2 ml" to an accumulated value "5 l" of the detergent usage quantity as shown in FIG. 10.

The reagent ordering unit 45a in the reagent managing unit 45 includes a reagent ordering program to perform reagent ordering and determines whether it is necessary to place an order for a reagent. The necessity of reagent ordering is determined based on the estimated reagent remaining quantity that is obtained by subtracting the overall reagent remaining quantity from the reagent usage quantity. When the value of the estimated reagent remaining quantity is negative, it is determined that placing an order for the reagent is not necessary; and when the value of the estimated reagent remaining quantity is positive, it is determined that placing an order for the reagent is necessary. The reagent ordering unit 45a displays the estimated reagent remaining quantity (post-upcoming-analysis reagent remaining quantity) for each reagent on the display panel, which functions as a display unit, for operator confirmation. For example, in the display of the reagent remaining quantity per day, the time limit for reagent ordering on that day can be displayed. Similarly, in the display of the reagent remaining quantity per week, a day of that week can be displayed as the deadline for reagent ordering. Moreover, in the display of the reagent remaining quantity per month, a date in that month can be displayed as the deadline for reagent ordering. Meanwhile, the data of the estimated reagent remaining quantity is also stored in the managing database 43.

When it is determined that placing an order for a reagent is necessary, the reagent ordering unit 45a places an order for that reagent to the reagent supplying source based on the estimated reagent remaining quantity (post-upcoming-analysis reagent remaining quantity) calculated by the upcoming-remaining-quantity calculating unit 40c. The reagent ordering program in the reagent ordering unit 45a can be written in such a way that the data processing unit 40 automatically generates a purchase order without operator instructions based on the data of purchase order stored in the managing database 43. Alternatively, the reagent ordering program can be written in such a way that the operator is able to selectively instruct purchase order generation by using the input unit 41 such as the mouse. The generated purchase order includes information such as reagent type, manufacturing lot number currently in use, ordering quantity, delivery deadline, and calibrator lot number. Meanwhile, the reagent ordering program can be written in such a way that the time of reagent ordering is notified and the data processing unit 40 automatically generates a purchase order without operator instructions or can be written in such a way that the purchase order is generated according to the operator instructions.

The material ordering unit 46a in the common-materials managing unit 46 includes a material ordering program to perform material ordering and determines whether it is necessary to place an order for a material. The necessity of material ordering is determined based on an estimated value that is obtained by the material ordering unit 46a by subtracting the usage limit condition from the material usage condition. When the estimated value is negative, it is determined that placing an order for the material is not necessary; while when the estimated value is positive, it is determined that placing an order for the material is necessary. The material ordering unit 46a displays a post-upcoming-analysis estimated value for each material on the display panel, which functions as a display unit in the notifying device 7, for operator confirmation.

When it is determined that placing an order for a material is necessary, the material ordering unit 46a places an order for that material to a material supplying source based on the estimated value obtained by subtracting the usage limit condition from the material usage condition.

Meanwhile, the data processing unit 40 is connected to the optical measurement sensor 314b via the control unit 5. Based on the light intensity (absorbance) measured by the optical measurement sensor 314b, the data processing unit 40 analyzes, for example, the constituent concentration of the specimen. More particularly, the data processing unit 40 analyzes the constituent concentration of the specimen by using the absorbance of the test liquid obtained by reaction of the reagent and the specimen in a cuvette C. The optical measurement sensor 314b can measure in advance the light intensity of a blank sample and use it as the absorbance for comparison. The analysis result can be output to the output unit 42.

As shown in FIG. 1, the managing device 10 that functions as the reagent supplying source includes a communication interface 11, a data processing unit 12, and a managing database 13. The communication interface 11 performs data communication with the automatic analyzer 1 via the IPsec network 16 and receives an encrypted purchase order generated in the automatic analyzer 1. The data processing unit 12 includes an order receiving unit 12a that functions as an order receiving means and processes the data received by the communication interface 11. In an identical manner to the data processing unit 40, the data processing unit 12 also includes an input unit (not shown) and an output unit (not shown).

The order receiving unit 12a includes an order receiving program for receiving an order placed for a reagent or a material. Thus, the order receiving unit 12a receives an order placed for a reagent or a material from the automatic analyzer functioning as the orderer apparatus via the IPsec network 16 and makes sure that the ordered reagent or material is delivered on the specified delivery deadline. The order receiving program can be written in such a way that the data processing unit 12 automatically generates an invoice list without operator instructions based on the received data of purchase order. Alternatively, the order receiving program can be written in such a way that the operator is able to selectively instruct invoice list generation by using the input unit such as the mouse. The generated invoice list includes information such as reagent type or material type, manufacturing lot number currently in use, ordering quantity, and delivery deadline, and calibrator lot number if a reagent is ordered.

The managing database 13 is used to store the invoice list generated by the data processing unit 12 and a client list of each automatic analyzer functioning as the orderer apparatus. The client list includes information such as address, name, telephone number, and e-mail address of the clients and wholesale prices of reagents or materials. In addition, the managing database 13 is also used to store a variety of other data such as an information deciphering program for deciphering the encrypted information and data for verifying an automatic analyzer functioning as the orderer apparatus.

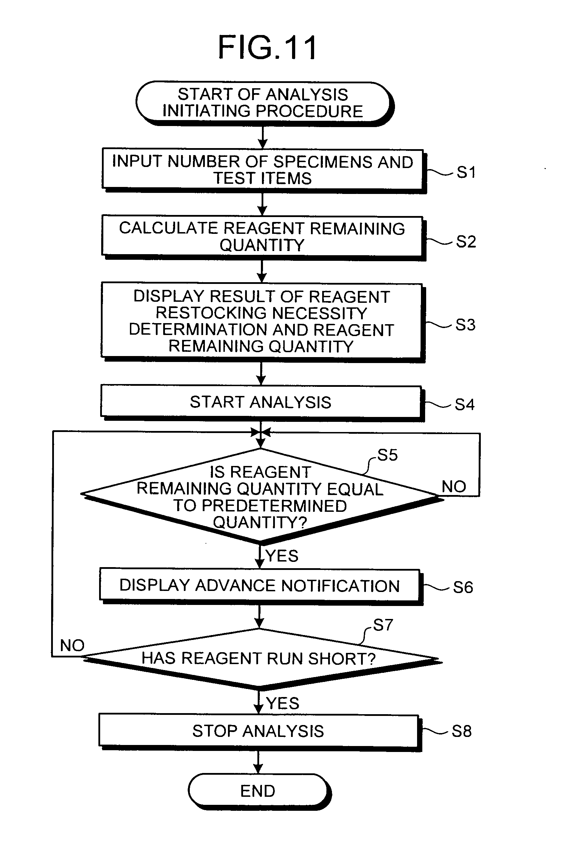

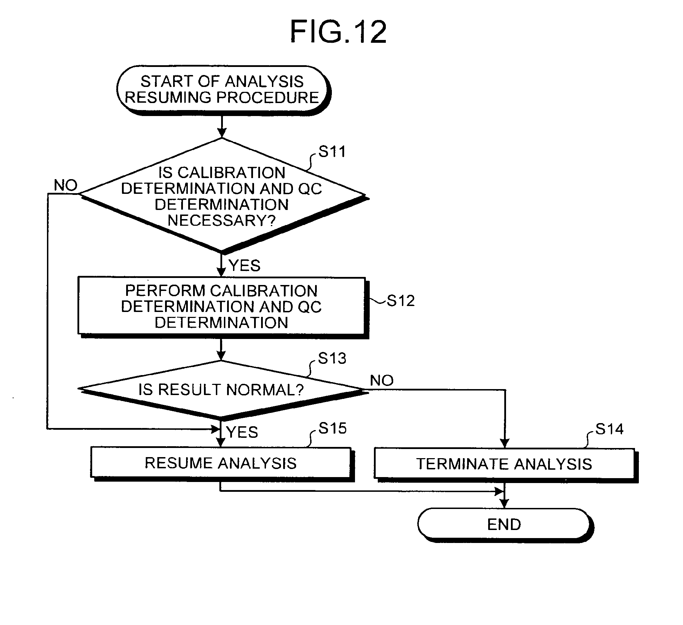

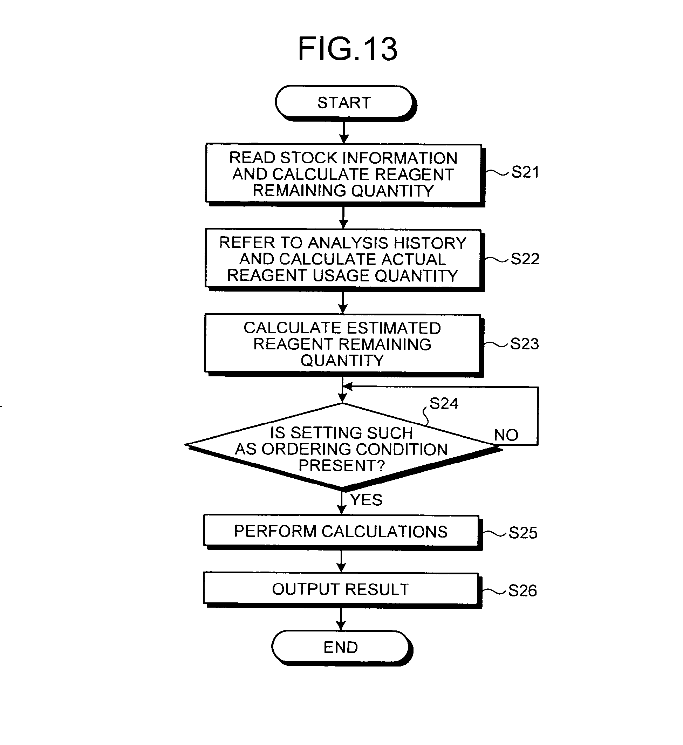

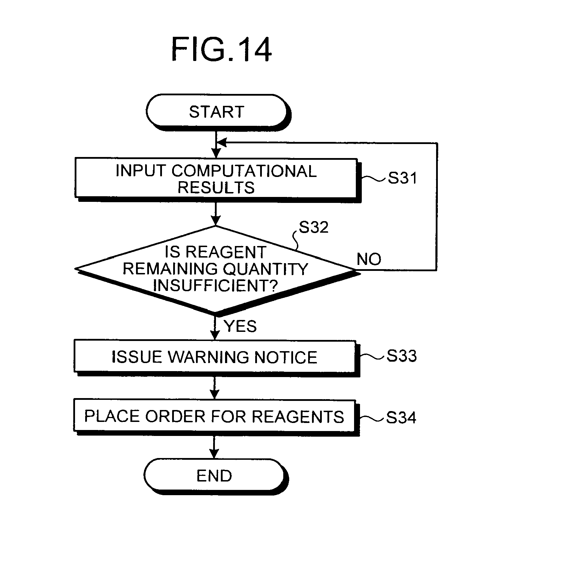

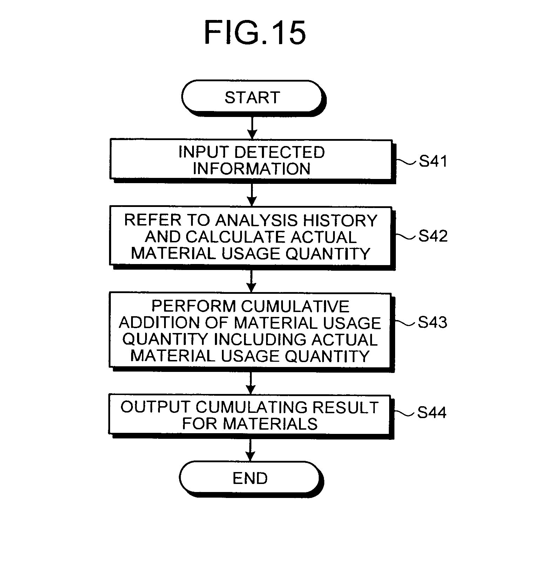

Given below is the description of operations in the automatic analyzer 1 according to the first embodiment with reference to FIGS. 11 to 16. FIG. 11 is a flowchart for explaining an analysis initiating procedure in the automatic analyzer 1 according to the first embodiment of the present invention. FIG. 12 is a flowchart for explaining an analysis resuming procedure in the automatic analyzer 1 according to the first embodiment of the present invention. FIG. 13 is a flowchart for explaining an operation of calculating the reagent remaining quantity in the automatic analyzer 1 according to the first embodiment of the present invention. FIG. 14 is a flowchart for explaining an operation of reagent ordering performed by the reagent managing unit 45 according to the first embodiment of the present invention. FIG. 15 is a flowchart for explaining an operation of calculating the material usage condition in the automatic analyzer 1 according to the first embodiment of the present invention.

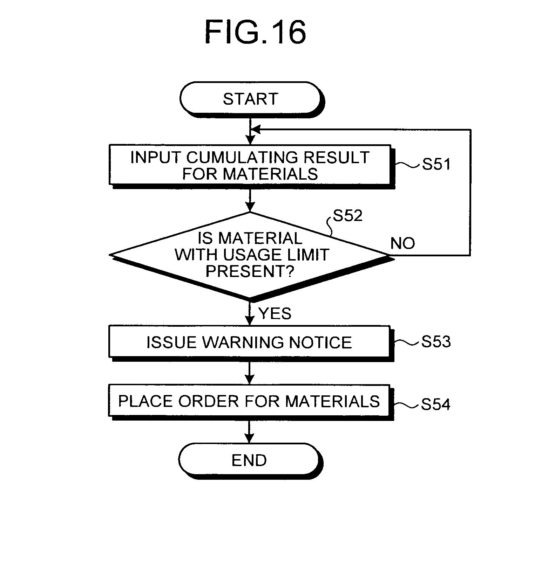

FIG. 16 is a flowchart for explaining an operation of material ordering performed by the common-materials managing unit 46 according to the first embodiment of the present invention.

First, analysis is initiated by performing an analysis initiating procedure explained with reference to FIG. 11. The analysis initiating procedure includes, for example, input of the specimen count and the test items. When the specimen count and the test items are input from the input unit 41 of the data processing unit 40 (Step S1), the data processing unit 40 calculates the reagent remaining quantity in the reagent bottles B stored in the first cool reagent-container 32 and the second cool reagent-container 33 (Step S2). Subsequently, the data processing unit 40 determines whether any of the reagents needs to be restocked (Step S3) and displays the result of reagent restocking necessity determination and the reagent remaining quantity on the display panel for operator confirmation (Step S3). Then, the automatic analyzer 1 starts the analysis (Step S4).

Once the analysis starts, the specimen supplying unit 2 supplies a specimen to the analyzing unit 3. More particularly, the rack supplying conveyer 22 supplies the rack 20 to the rack transporting conveyer 23 that in turn transports the rack 20 to the specimen supplying position.

In the analyzing unit 3, reagents from the first cool reagent-container 32 and the second cool reagent-container 33 and the specimen from the specimen supplying unit 2 are dispensed to a cuvette C, and the reaction of that mixed liquid is subjected to optical measurement for analysis. The details of these operations are given below.

First, in the first cool reagent-container 32, a reagent bottle B containing a reagent corresponding to the analysis item is transferred to the reagent supplying position. Subsequently, the first reagent dispensing unit 35 sucks in a first reagent from the reagent bottle B and dispenses it to a cuvette C positioned at the first reagent dispensing position. The cleaning unit 353 then cleans the probe 352 that has been used in the dispensing operation.

When the cuvette wheel 313 rotates and the cuvette C containing the first reagent moves to the specimen dispensing position, the specimen dispensing unit 34 sucks in the specimen from the sampling tube 21 that has been transported to the specimen supplying position and dispenses it to the cuvette C positioned at the specimen dispensing position. The cleaning unit 343 then cleans the probe 342 that has been used in the dispensing operation.

When the cuvette wheel 313 rotates for four cycles, the cuvette C containing the specimen and the first reagent moves from the dispensing position of the first reagent by one pitch in the clockwise direction. Consequently, the first reagent can be dispensed to the cuvette C that lies counterclockwisely adjacent to the cuvette C containing the specimen and the first reagent.

Subsequently, when the cuvette wheel 313 rotates and the cuvette C containing the specimen and the first reagent moves to the first stirring position, the first stirring unit 37 stirs the first reagent and the specimen filled in the cuvette C. The cleaning unit 373 then cleans the stir bar 372 that has been used in stirring.

When the cuvette wheel 313 rotates and the cuvette C containing the stirred mixed liquid moves to the second reagent dispensing position, a second reagent can be dispensed to that cuvette C. Because, a normal analysis does not require dispensing of the second reagent, it is dispensed only as necessary. Consider a case of dispensing the second reagent to the cuvette C. Then, in an identical manner to the dispensing of the first reagent, a reagent bottle B containing a reagent corresponding to the analysis item is transferred to the reagent supplying position in the second cool reagent-container 33. Subsequently, the second reagent dispensing unit 36 sucks in the second reagent from the reagent bottle B and dispenses it to the cuvette C positioned at the second reagent dispensing position. The cleaning unit 363 then cleans the probe 362 that has been used the dispensing operation.

When the cuvette wheel 313 rotates and the cuvette C containing the mixed liquid and the second reagent moves to the second stirring position, the second stirring unit 38 can perform stirring of the mixed liquid in the cuvette C. If the second reagent is not dispensed to the cuvette C, then the second stirring unit 38 need not perform stirring.

When each cuvette C containing the stirred test liquid of the reagents and the specimen crosses the measurement optical system 314, the optical measurement sensor 314b performs optical measurement. Based on the light intensity (absorbance) optically measured by the optical measurement sensor 314b, the data processing unit 40 analyzes the constituent concentration of the corresponding specimen.

After completion of the optical measurement of a test liquid, the cuvette C containing that test liquid moves to the cleaning/drying position. The cleaning/drying unit 39 then sucks in and destroys the test liquid, cleans the inside of the cuvette C with the cleaning water supplied from the cleaning tank, and dries the cuvette C with the compressed air. Then, the first reagent dispensing unit 35 again dispenses the first reagent to the cleaned cuvette C for upcoming analysis.

When a reagent remaining quantity equals a predetermined reagent quantity after the analysis process has started (Yes at Step S5), an advance notification of the necessity to restock the corresponding reagent is displayed on the display panel (Step S6). On the other hand, if the reagent remaining quantity is yet to equal the predetermined reagent quantity (No at Step S5), advance notification is delayed until the reagent remaining quantity equals the predetermined reagent quantity.

Subsequently, if the reagent runs short (Yes at Step S7), that is, if suction verifying means of the first reagent dispensing unit 35 and the second reagent dispensing unit 36 cannot verify suction of a predetermined reagent quantity, then the analysis is stopped (Step S8). On the other hand, unless the reagent runs short (No at Step S7), analysis is continued until the reagent remaining quantity equals the predetermined reagent quantity.

The reagent restocking device collects empty reagent bottles B from the first cool reagent-container 32 and the second cool reagent-container 33 and restocks the first cool reagent-container 32 and the second cool reagent-container 33 with new reagent bottles B from the reagent storage container. The barcode readers 323 and 333 in the first cool reagent-container 32 and the second cool reagent-container 33, respectively, read the barcode labels applied on the reagent bottles B and the data processing unit 40 obtains information regarding the restocked reagents via the control unit 5.

Subsequently, analysis is resumed by performing an analysis resuming procedure explained with reference to FIG. 12. The analysis resuming procedure includes, for example, calibration determination. If deemed necessary (Yes at Step S11), calibration determination and QC determination is performed (Step S12). If the result of calibration determination and QC determination is normal (Yes at Step S13), the analysis is resumed (Step S15), On the other hand, if the result of at least one of calibration determination and QC determination is not normal (No at Step S13), the analysis is terminated (Step S14) and the notification of termination is displayed on the display panel. Meanwhile, if calibration determination and QC determination is not deemed necessary (No at Step S11), the analysis is resumed directly (Step S15).

A case in which calibration determination and QC determination is necessary is when the manufacturing lot number of a pre-restocking reagent is different than the manufacturing lot number of a post-restocking reagent. If the manufacturing lot number of the pre-restocking reagent is same as the manufacturing lot number of the post-restocking reagent, then there is no need to perform calibration determination and QC determination.

In the abovementioned automatic analyzer 1 according to the first embodiment, the reagent remaining quantity is calculated by subtracting the reagent quantity used in analysis from the reagent quantity filled in the reagent bottles B. Moreover, a projected reagent quantity is calculated by multiplying the reagent quantity used in analysis by a number of times for which analysis is scheduled. The reagent remaining quantity and the projected reagent quantity are compared to determine whether reagent restocking is necessary. If it is determined that reagent restocking is necessary, it is notified on the display panel thereby enabling the operator to prepare for reagent restocking.

Moreover, displaying the reagent remaining quantity on the display unit allows the operator to weigh the timing of reagent restocking with the reagent remaining quantity as a guideline.

Thus, as described above, if a reagent in need of restocking is notified, then the reagent bottles B containing that particular reagent can be stored in the reagent storage container. That reduces the analysis downtime in the automatic analyzer thereby enabling to resume the analysis in a short time.

Given below is the description about calculating the reagent remaining quantity in the automatic analyzer 1 according to the first embodiment. As explained with reference to FIG. 13, the information reading device 6 in the automatic analyzer 1 reads, at the time of stocking, the barcode label applied on the outer packaging containing the reagent bottles B and outputs the read information to the data processing unit 40. Thus, the data processing unit 40 obtains the stock information of the restocked reagents. Moreover, the data processing unit 40 imports the reagent replacement information indicating that the reagents stored in the first cool reagent-container 32 and the second cool reagent-container 33 had run short due to their use in analysis and the empty reagent bottles have been replaced by new reagent bottles or imports the data of the reagent remaining quantity calculated as explained with reference to FIG. 10. Then, the current-remaining-quantity calculating unit 40b uses that information to calculate the overall reagent remaining quantity of each identical-type reagent (Step S21). Meanwhile, while the stock information is being read, the manufacturing lot number of a reagent having, for example, an early expiration date can be displayed on the display unit for operator confirmation such that the operator is encouraged to use that particular reagent on a priority basis.

Subsequently, the usage quantity estimating unit 40a refers to the analysis history to obtain the specimen count and the analysis items on the same date of the previous year (corresponding to the date of upcoming analysis) and calculates the actual reagent usage quantity (Step S22). The upcoming-remaining-quantity calculating unit 40c calculates the estimated reagent remaining quantity of each identical-type reagent (Step S23). Moreover, the upcoming-remaining-quantity calculating unit 40c looks for settings such as an ordering condition, a delivery deadline, and a usage condition. If such settings are present (Yes at Step S24), the upcoming-remaining-quantity calculating unit 40c performs calculations based on those settings (Step S25) and outputs the result to a display of the data processing device 4 (Step S26). On the other hand, if such settings are not present (No at Step S24), the upcoming-remaining-quantity calculating unit 40c waits until, for example, an ordering condition is set.

Given below is the description with reference to FIG. 14 of the reagent ordering operation performed by the reagent ordering unit 45a in the reagent managing unit 45. The reagent ordering unit 45a receives computational results from the data processing unit 40 (Step S31) and determines whether it is necessary to place an order for each reagent and whether there is insufficiency in any reagent remaining quantity (Step S32). If no insufficiency is found in any reagent remaining quantity (No at Step S32), the reagent ordering unit 45a waits for the input of subsequent computational results. On the other hand, if insufficiency is found in the reagent remaining quantity (Yes at Step S32), the reagent ordering unit 45a instructs the notifying device 7 to issue a warning notice (Step S33) and outputs the result of reagent ordering necessity determination and the estimated reagent remaining quantity regarding each identical-type reagent to the display of the data processing device 4 for operator confirmation. Subsequently, the reagent ordering unit 45a generates a purchase order for reagents, establishes a connection with the managing device 10 that functions as a reagent supplying source via the IPsec network 16, and places an order for reagents to the managing device 10 (Step S34).

Given below is the description about the operation of calculating material usage conditions in the automatic analyzer 1 according to the first embodiment of the present invention. With reference to FIG. 15, the material usage estimating unit 40d receives the detected information on the light-source operating time, the detergent liquid usage quantity, the Ferista tube usage count, and the syringe usage count from the control unit 5 (Step S41), refers to the analysis history to obtain the specimen count and the analysis items on the same date of the previous year (corresponding to the date of upcoming analysis), and calculates actual material usage quantity (Step S42). Then, the cumulative addition performing unit 40e performs cumulative addition of material usage quantity including the actual material usage quantity for each material (Step S43) and outputs a cumulating result for materials to the display of the data processing device 4 (Step S44).

Given below is the description with reference to FIG. 16 of the material ordering operation performed by the material ordering unit 46a in the common-materials managing unit 46. The material ordering unit 46a receives the cumulating result for materials from the cumulative addition performing unit 40e (Step S51) and determines whether it is necessary to place an order for each material and whether there is any material with a usage limit (Step S52). If no material with a usage limit is found (No at Step S52), the material ordering unit 46a waits for the input of subsequent cumulating result for materials. On the other hand, if a material with a usage limit is found (Yes at Step S52), the material ordering unit 46a instructs the notifying device 7 to issue a warning notice (Step S53) and outputs the result of material ordering necessity determination and the estimated remaining usage quantity up to the usage limit for each material to the display of the data processing device 4 for operator confirmation. Subsequently, the material ordering unit 46a generates a purchase order for materials, establishes a connection with the managing device 10 that also functions as a material supplying source (identical to functioning as a reagent supplying source according to the first embodiment) via the IPsec network 16, and places an order for materials to the managing device 10 (Step S54).

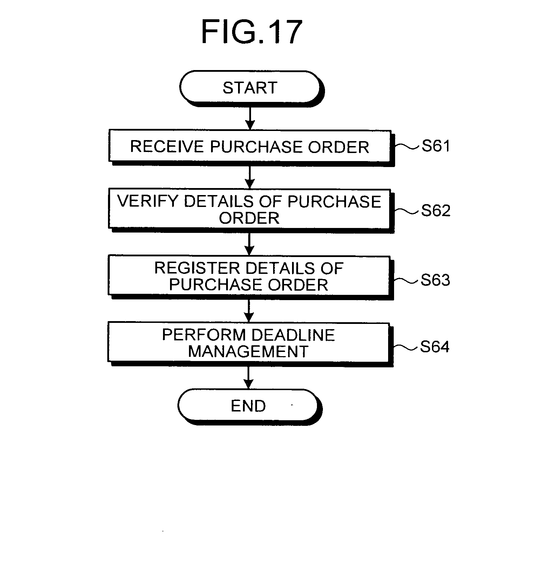

Given below is the description with reference to FIG. 17 of an order reception managing procedure performed by the managing device 10 according to the first embodiment of the present invention. The managing device 10 is disposed at a reagent manufacturer that supplies the reagents. When there is a connection request from the automatic analyzer 1, the communication interface 11 of the managing device 10 validates the client, establishes an IPsec connection for data communication, and receives a purchase order from the automatic analyzer of the client (Step S61). The order receiving unit 12a of the data processing unit 12 verifies the details in the received purchase order (Step S62). If the details are found to be insufficient, then the order receiving unit 12a requests retransmission of the purchase order; while if the details are found to be sufficient, the order receiving unit 12a accepts the received purchase order and registers the details thereof in the managing database 13 (Step S63) and performs deadline management for the reagent (or the material) to be shipped (Step S64).

Thus, at the reagent supplying source, a managing device is disposed to perform management of the ordered reagents or materials. That enables the reagent supplying source to prepare for the shipment according to the order details and promptly ship the reagents by the delivery deadline.

According to the first embodiment, the reagent remaining quantity is calculated by subtracting the reagent quantity used in analysis from the reagent quantity of the reagent. The actual reagent usage quantity for a period corresponding to the period of upcoming analysis is calculated by using the history information. Then, the actual reagent usage quantity and the reagent remaining quantity are compared to calculate the estimated reagent remaining quantity that is used in determining whether it is necessary to place an order for a reagent. That allows order management and inventory management for reagents according to the used quantity in an optimal manner. As a result, it becomes possible to reduce the time consumed in performing order management or inventory management and further reduce the efforts needed to be taken by the operator.

Moreover, according to the first embodiment, the actual material usage quantity for a period corresponding to the period of upcoming analysis is added to the cumulative usage value of material usage to determine whether it is necessary to place an order for a material. That enables to reduce the time consumed in performing order management or inventory management of materials and further reduce the efforts needed to be taken by the operator.

Furthermore, according to the first embodiment, an information reading unit is disposed to read the reagent quantity filled in reagent bottles. That allows optimal inventory checking of reagents while reducing the time consumed and the efforts needed to be taken by the operator.

Moreover, according to the first embodiment, the current remaining quantity of each reagent is calculated by subtracting the reagent quantity used in analysis from the overall reagent quantity. In addition, the reagent usage quantity on the same date of the previous year (actual reagent usage quantity) and the reagent remaining quantity are compared to determine whether it is necessary to place an order for a reagent. If it is determined that reagent restocking is necessary, it is notified on a display panel thereby enabling the operator to prepare for reagent restocking.

Furthermore, according to the first embodiment, the estimated reagent remaining quantity calculated by an upcoming-remaining-quantity calculating unit is displayed on the display panel. That allows weighing of the timing of reagent restocking with the estimated reagent remaining quantity as a guideline.

Moreover, according to the first embodiment, the settings for reagent ordering and material ordering can be performed in such a way that the data processing unit 40 automatically sends a purchase order without operator instructions by establishing an online connection with the managing device 10, which functions as the reagent supplying source, for communication via a communication network or in such a way that the operator is able to selectively send a purchase order. As a result, it is possible to provide enhanced apparatus versatility and system versatility. Furthermore, according to the first embodiment, communication via online connection creates a possibility, for example, of entrusting a reagent supplying source with reagent supply based on an agreement between the reagent supplying source and the user of an automatic analyzer. That reduces the task of inventory management needed to be performed at the user side.

Moreover, according to the first embodiment, past record of reagent usage quantity or material usage values (usage quantity, usage period, usage count, etc.) can be used to estimate the reagent usage quantity or the material usage values required for the period of upcoming analysis. That makes it possible to store only the minimum quantity of reagents and materials and thus reduce the storage space to the minimum.

Furthermore; according to the first embodiment, it is possible to notify the operator of information regarding the expiration date of reagents. That allows the operator to use the reagent with an early expiration date on a priority basis and enhance efficient use of the reagents.

Moreover, according to the first embodiment, the reagent supplying source is able to promptly receive the information on the reagent usage status at the user side having an automatic analyzer. That enables the reagent supplying source to ship the ordered reagents in a timely manner and reduce distribution costs.

Meanwhile, in the abovementioned automatic analyzer, order management is described for reagents as well as materials such as detergent liquid, lamps, Ferista tubes, and syringes. However, the present invention is not limited to the above description and can be implemented in an identical manner to perform order management for, for example, probes or stir bars.

### Second embodiment

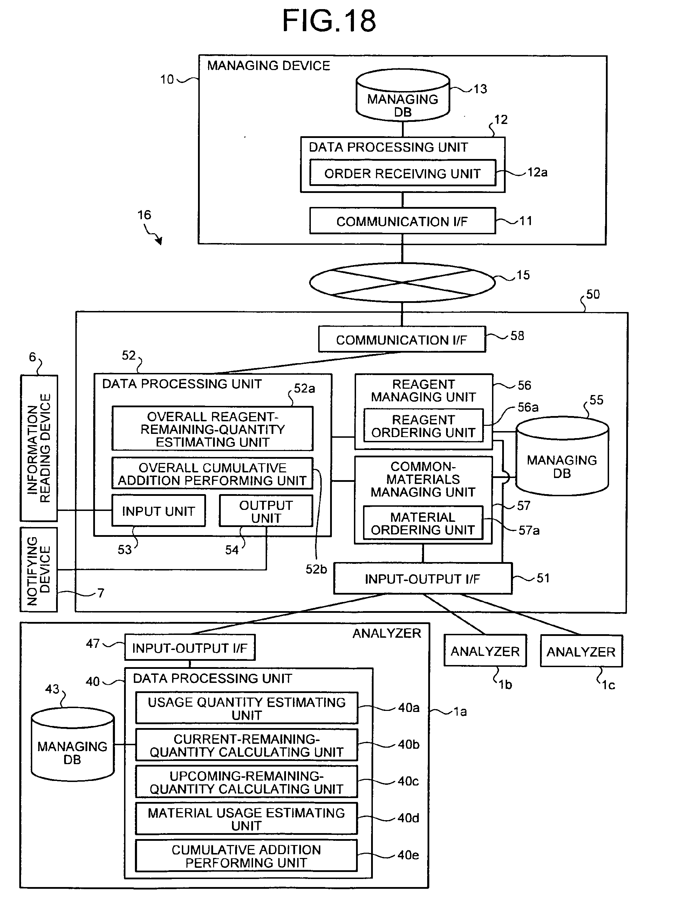

FIG. 18 is a. configuration diagram for explaining a schematic configuration of an order management system according to a second embodiment of the present invention. In the order management system according to the second embodiment as shown in FIG. 18, a plurality of automatic analyzers 1a to 1c that perform specimen analysis are connected to a host apparatus 50 functioning as a controller. The host apparatus 50 is in turn connected to the managing device 10, which functions as the reagent supplying source, via the public line network 15 to form the IPsec network 16.

Each of the automatic analyzers 1a to 1c as well as the managing device 10 functioning as the reagent supplying source has a substantially identical structure to that shown in FIG. 1 and FIG. 6, except that the data processing unit 40 in each of the automatic analyzers 1a to 1c includes, as a substitute to a reagent ordering unit, a notifying unit for notifying a host computer of the data of estimated reagent remaining quantity calculated by the upcoming-remaining-quantity calculating unit 40c. That is, in the data processing unit 40 in each of the automatic analyzers 1a to 1c, the upcoming-remaining-quantity calculating unit 40c compares the actual reagent usage quantity and the overall reagent remaining quantity to calculate the estimated reagent remaining quantity and the cumulative addition performing unit 40e calculates the cumulative usage value for each material.

The calculated data of estimated reagent remaining quantity, the data of reagent quantity, and the data of cumulative usage value for materials are sent to the host apparatus 50 via a communication line. Moreover, each of the automatic analyzers 1a to 1c also sends reagent replacement information that indicates replacement of reagent bottles to the host apparatus 50.

The host apparatus 50 performs inventory management of the reagents and materials used by the plurality of automatic analyzers 1a to 1c and places an order for a reagent or a material to the managing device 10, which functions as the reagent supplying source or the material supplying source, as necessary. As shown in FIG. 18, the host apparatus 50 includes an input-output interface 51, a data processing unit 52, a managing database 55, a reagent managing unit 56, a common-materials managing unit 57, and a communication interface 58.

The input-output interface 51 performs data communication with the automatic analyzers 1a to 1c via the communication line and receives the data of estimated reagent remaining quantity and the data of cumulative usage value for materials from each of the automatic analyzers 1a to 1c. The data processing unit 52 includes an input unit 53 and an output unit 54, and processes data received by the input-output interface 51 and data input from the input unit 53. The input unit 53 is, for example, a keyboard or a mouse that can be used to input a variety of information such as the specimen count and the test items. In addition, the input unit 53 is connected to the information reading device 6 (described later). The output unit 54 is, for example, a display panel or a printer that can be used to output a variety of information such as the details of analysis including analysis results or warning notices. Moreover, the output unit 54 is connected to the notifying device 7.

The reagent managing unit 56 and the common-materials managing unit 57 are connected to the data processing unit 52 and the managing database 55, and can perform block control. The reagent managing unit 56 and the common-materials managing unit 57 can use, for example, a microcomputer to control the operations of the constituent elements of the host apparatus 50. Moreover, the reagent managing unit 56 outputs the data of reagent remaining quantity or the data of estimated reagent remaining quantity, which is received from the each of the automatic analyzers 1a to 1c via the input-output interface 51, to the data processing unit 52. The common-materials managing unit 57 outputs the result of overall cumulative addition, which is received from the each of the automatic analyzers 1a to 1c via the input-output interface 51, to the data processing unit 52. Furthermore, the reagent managing unit 56 and the common-materials managing unit 57 send inventory information (described later) obtained from the data processing unit 52 to each of the automatic analyzers 1a to 1c via the input-output interface 51.

The data processing unit 52 includes an overall reagent-remaining-quantity estimating unit 52a, an overall cumulative addition performing unit 52b, the input unit 53, and the output unit 54. The data processing unit 52 processes a variety of data obtained by the control unit 56 and a variety of data input from the input unit 53. The overall reagent-remaining-quantity estimating unit 52a adds the reagent remaining quantity received from each of the automatic analyzers 1a to 1c to calculate an overall reagent remaining quantity. The overall cumulative addition performing unit 52b adds the cumulating result of material usage quantity including actual material usage quantity received from each of the automatic analyzers 1a to 1c to calculate an overall cumulating result (overall cumulative usage values). The input unit 53 is, for example, a mouse or a keyboard that can be used to input a variety of information such as the specimen count and the test items. The test items can be input on an individual basis or as a part of a broad classification such as standard test items and extensive test items. Meanwhile, the input unit 53 is connected to the information reading device 6. The output unit 54 is, for example, a display panel or a printer that can be used to output a variety of information such as the details of analysis including analysis results or warning notices.

The data processing unit 52 is connected to the managing database 55 and the communication interface 58. The managing database 55 is used to store information of reagents or materials necessary in analysis (stock information and dispatch information read by the information reading device 6) as well as the data of reagent remaining quantity, estimated reagent remaining quantity, cumulative usage values, and purchase orders obtained from each of the automatic analyzers 1a to 1c.

The communication interface 58 performs data communication with the managing device 10, which functions as the reagent supplying source, via the IPsec network 16, and encrypts purchase orders generated in a reagent ordering unit 56a (described later) and a material ordering unit 57a (described later) and sends the encrypted purchase orders to the managing device 10.

The information reading device (information reading means) 6 is detachably attached to the data processing unit 52 via the input unit 53. The information reading device 6 is, for example, a barcode reader that reads a barcode label applied to the outer packaging of stocked reagents and obtains information regarding the reagents filled in the reagent bottles. The obtained information is output to the data processing unit 52. Subsequently, the data processing unit 52 stores the information on the stocked reagent quantity as stock information (inventory information) in the managing database 55. During analysis in each automatic analyzer 1, when a reagent bottle is determined to be empty, it is replaced with a new reagent bottle and that information is obtained. Then, the data processing unit 52 performs an entry of the dispatch information (dispatch entry) indicating that the empty reagent bottle is dispatched from the reagent inventory.

Given below is the description of constituent elements of the data processing unit 52 and the reagent managing unit 56. The overall reagent-remaining-quantity estimating unit 52a calculates adds the estimated reagent remaining quantity for each reagent in each of the automatic analyzers 1a to 1c to calculate the overall estimated reagent remaining quantity. Herein, when the reagent usage quantity is larger than the overall reagent remaining quantity, the value of the estimated reagent remaining quantity becomes positive; and when the reagent usage quantity is smaller than the overall reagent remaining quantity, the value of the estimated reagent remaining quantity becomes negative. The overall estimated reagent remaining quantity is used by the reagent ordering unit 56a in the reagent managing unit 56 to determine whether it is necessary to place an order for a reagent.

The reagent ordering unit 56a includes a reagent ordering program to perform reagent ordering and determines, in an identical manner to the reagent ordering unit 45a described in the first embodiment, whether it is necessary to place an order for a reagent. The necessity of reagent ordering is determined based on the overall estimated reagent remaining quantity. When the value of the overall estimated reagent remaining quantity is negative, it is determined that placing an order for the reagent is not necessary; and when the value of the overall estimated reagent remaining quantity is positive, it is determined that placing an order for the reagent is necessary. When it is determined that placing an order for a reagent is necessary, the reagent ordering unit 56a places an order for that reagent to the reagent supplying source based on a post-upcoming-analysis estimated reagent remaining quantity calculated by the upcoming-remaining-quantity calculating unit 40c.

The material ordering unit 57a includes a material ordering program to perform material ordering and determines, in an identical manner to the material ordering unit 46a described in the first embodiment, whether it is necessary to place an order for a material. The necessity of material ordering is determined based on an estimated value that is obtained by the material ordering unit 46a by subtracting the usage limit condition from the material usage condition. When the estimated value is negative, it is determined that placing an order for the material is not necessary; while when the estimated value is positive, it is determined that placing an order for the material is necessary. When it is determined that placing an order for a material is necessary, the material ordering unit 46a places an order for that material to a material supplying source based on the estimated value obtained by subtracting the usage limit condition from the material usage condition.

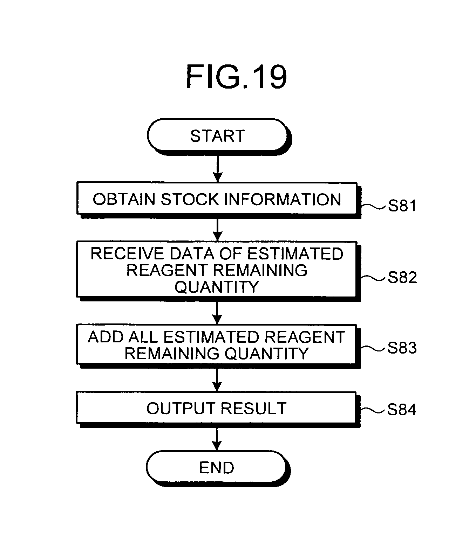

Given below is the description of an ordering operation performed by the host apparatus 50. FIG. 19 is a flowchart for explaining an order managing procedure in the host apparatus 50 according to the second embodiment of the present invention. With reference to FIG. 19, when the information reading device 6 reads, at the time of stocking, the barcode label applied on the outer packaging containing the reagent bottles B and outputs the read information to the data processing unit 52, the data processing unit 52 in the host apparatus 50 obtains the stock information of received reagents (Step S81).

Each of the automatic analyzers 1a to 1c send the data of estimated reagent remaining quantity calculated by the corresponding upcoming-remaining-quantity calculating unit 40c. When the host apparatus 50 receives the data of estimated reagent remaining quantity (Step S82), the overall reagent-remaining-quantity estimating unit 52a performs addition of all the estimated reagent remaining quantity (Step S83), outputs the addition result (Step S84), and displays it on a display. The reagent ordering unit 56a uses the addition result to determine whether it is necessary to place an order for a reagent, and outputs the result of reagent ordering necessity determination and the estimated reagent remaining quantity regarding each identical-type reagent to the display for operator confirmation. Subsequently, the reagent ordering unit 56a generates a purchase order for reagents, establishes a connection with the managing device 10 functioning as the reagent supplying source via the IPsec network 16, and places an order for reagents to the managing device 10 (Step S34). In addition to the estimated reagent remaining quantity, the host apparatus 50 imports the reagent replacement information indicating that empty reagent bottles used in analysis have been replaced by new reagent bottles or imports the data of current reagent remaining quantity from each of the automatic analyzers 1a to 1c. Thus, it is also possible for the host apparatus 50 to use the imported information in calculating the overall estimated reagent remaining quantity of each identical-type reagent.

At the reagent supplying source, the managing device 10 manages, as described with reference to FIG. 17, the reagent order details received from the host apparatus 50. That enables the reagent supplying source to prepare for the shipment according to the order details and promptly ship the reagents by the delivery deadline.

The material order management is also performed in a similar manner to the reagent order management. For that, the overall cumulative addition performing unit 52b adds each cumulating result of material usage quantity to calculate the overall cumulating result and outputs the overall cumulating result to the material ordering unit 57a. Subsequently, the material ordering unit 57a uses the overall cumulating result to determine whether it is necessary to place an order for a material, and outputs the result of material ordering necessity determination and the remaining usage value up to the usage limit to the display for operator confirmation.

According to the second embodiment, each of the plurality of automatic analyzers calculates the estimated reagent remaining quantity by subtracting the reagent remaining quantity from the reagent usage quantity. The host apparatus obtains the data of estimated reagent remaining quantity and calculates the overall estimated reagent remaining quantity by adding all of the estimated reagent remaining quantity to determine whether it is necessary to place an order for a reagent. That allows order management and inventory management for reagents according to the used quantity in a collective and optimal manner. As a result, it becomes possible to reduce the time consumed in performing order management or inventory management and further reduce the efforts needed to be taken by the operator.

Moreover, according to the second embodiment, the host apparatus performs cumulative addition of all cumulating results of material usage quantity to calculate an overall cumulating result of all materials and uses the overall cumulating result in determining whether it is necessary to place an order for a reagent. That allows order management and inventory management for materials used according to material usage values (usage quantity, usage period, usage count, etc.) by a plurality of automatic analyzers in a collective and optimal manner. As a result, it becomes possible to reduce the time consumed in performing order management or inventory management for materials and further reduce the efforts needed to be taken by the operator.

Furthermore, according to the second embodiment, an information reading device that reads the reagent quantity filled in reagent bottles is connected to the host apparatus. That allows inventory checking of reagents in a collective and optimal manner while reducing the time consumed and the efforts needed to be taken by the operator.

Moreover, according to the second embodiment, the current remaining quantity of each reagent is calculated in such a way that the reagent quantity used in analysis is subtracted from the overall reagent quantity. In addition, the reagent usage quantity on the same date of the previous year (actual reagent usage quantity) and the reagent remaining quantity are compared to determine whether it is necessary to place an order for a reagent. If it is determined that reagent restocking is necessary, it is notified on a display panel thereby enabling the operator to prepare for reagent restocking.

Furthermore, according to the second embodiment, the overall estimated reagent remaining quantity calculated by an overall reagent-remaining-quantity estimating unit is displayed on the display panel. That allows weighing of the timing of reagent restocking with the estimated reagent remaining quantity as a guideline.

Moreover, according to the second embodiment, the settings for reagent ordering can be performed in such a way that the data processing unit 52 automatically sends a purchase order without operator instructions by establishing an online connection with the managing device 10, which functions as the reagent supplying source, for communication via a communication network or in such a way that the operator is able to selectively send a purchase order. As a result, it is possible to provide enhanced apparatus versatility and system versatility. Furthermore, according to the second embodiment, communication via online connection creates a possibility, for example, of entrusting a reagent supplying source with reagent supply based on an agreement between the reagent supplying source and the user of the host apparatus. That reduces the task of inventory management needed to be performed at the user side.

Moreover, according to the second embodiment, past record of reagent usage quantity in each automatic analyzer can be used to estimate the reagent usage quantity required for the period of upcoming analysis. That makes it possible to store only the minimum quantity of reagents and thus reduce the storage space to the minimum.

Furthermore, according to the second embodiment, it is possible to notify the operator of information regarding the expiration date of reagents. That allows the operator to use the reagent with an early expiration date on a priority basis and enhance efficient use of the reagents.

Moreover, according to the second embodiment, the reagent supplying source is able to promptly receive the information on the reagent usage status at the user side having automatic analyzers. That enables the reagent supplying source to ship the ordered reagents in a timely manner and reduce distribution costs.

Meanwhile, in the present invention, it is also possible to have a configuration in which, for example, the reagent quantity filled in a reagent bottle can be divided by the reagent quantity required in analysis to calculate an analyzable count and subtract an actual analysis count from the analyzable count to calculate an analyzable count remainder. Then, for example, the analysis count on the same date of the previous year (actual analysis count) and the analyzable count remainder can be compared to determine whether it is necessary to place an order for a reagent. Subsequently, if it is determined that placing an order for a reagent is necessary, an order for a reagent is sent to a managing device. In this case too, it is possible to achieve the advantage identical to that achieved in the second embodiment.

### INDUSTRIAL APPLICABILITY

In this way, an automatic analyzer, an order management system, and an order management method according to the present invention is suitable in performing order management and inventory management of reagents according to the usage quantity in an optimal manner, reducing the time consumed in performing order management or inventory management, and reducing the efforts needed to be taken by the operator because an order for reagents is placed according to an estimated reagent remaining quantity calculated based on an actual reagent usage quantity for an analyzing period that is comparable to an analyzing period of upcoming analysis.

## Claims

1. An automatic analyzer for analyzing a specimen by assaying a test liquid containing a predetermined quantity of a reagent dispensed according to an analysis item from a reagent bottle and a predetermined quantity of the specimen, the automatic analyzer comprising:
an analysis history storing unit that stores therein history information of an analysis period, a specimen count, and an analysis item of analysis performed in past;
a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating unit that calculates a current reagent remaining quantity;
an upcoming-remaining-quantity calculating unit that calculates a post-upcoming-analysis reagent remaining quantity by subtracting the usage quantity of the reagent estimated by the usage quantity estimating unit from the current reagent remaining quantity calculated by the current-remaining-quantity calculating unit; and
a reagent ordering unit that manages the reagent remaining quantity, the reagent ordering unit placing an order for the reagent to a reagent supplying source if the reagent remaining quantity calculated by the upcoming-remaining-quantity calculating unit is a positive value.

2. An automatic analyzer, connected to a host apparatus performing reagent ordering, for analyzing a specimen by assaying a test liquid containing a predetermined quantity of a reagent dispensed according to an analysis item from a reagent bottle and a predetermined quantity of the specimen, the automatic analyzer comprising:
an analysis history storing unit that stores therein history information of an analysis period, a specimen count, and an analysis item of analysis performed in past;
a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating unit that calculates a current reagent remaining quantity;
an upcoming-remaining-quantity calculating unit that calculates a post-upcoming-analysis reagent remaining quantity by subtracting the usage quantity of the reagent estimated by the usage estimating unit from the current reagent remaining quantity calculated by the current-remaining-quantity calculating unit; and
a notifying unit that notifies the host apparatus of the reagent remaining quantity calculated by the upcoming-remaining-quantity calculating unit, the host apparatus managing the reagent remaining quantity.

3. The automatic analyzer according to claim 1 or 2, further comprising an information reading unit that reads a reagent usage quantity of stocked reagent, wherein
the current-remaining-quantity calculating unit calculates a current reagent remaining quantity that includes the reagent usage quantity read by the information reading unit.

4. An automatic analyzer for analyzing a specimen by assaying a test liquid containing a predetermined quantity of a reagent dispensed according to an analysis item from a reagent bottle and a predetermined quantity of the specimen, the automatic analyzer comprising:
an analysis history storing unit that stores therein history information of an analysis period, a specimen count, and an analysis item of analysis performed in past and any one of usage conditions including a usage quantity, a usage time, and a usage count of a material used in the analysis performed in past;
a usage quantity estimating unit that estimates, based on the history information of an analysis period corresponding to a period required for upcoming analysis, a usage condition of the material for the upcoming analysis by adding, for each material, a usage condition of the material specified in an analysis item in the history information;
an adding unit that performs, for each material, cumulative addition of a usage condition of the material including the usage condition of the material estimated by the usage quantity estimating unit; and
a material ordering unit that manages the usage condition of the material, the material ordering unit instructing issuing of a warning notice and placing an order for the material to a material supplying source if the usage condition of the material cumulatively added by the adding unit reaches a usage limit condition for the material.

5. An automatic analyzer, connected to a host apparatus performing reagent ordering, for analyzing a specimen by assaying a test liquid containing a predetermined quantity of a reagent dispensed according to an analysis item from a reagent bottle and a predetermined quantity of the specimen, the automatic analyzer comprising:
an analysis history storing unit that stores therein history information of an analysis period, a specimen count, and an analysis item of analysis performed in past and any one of usage conditions including a usage quantity, a usage time, and a usage count of a material used in the analysis performed in past;
a usage estimating unit that estimates, based on the history information of an analysis period corresponding to a period required for upcoming analysis, a usage condition of the material for the upcoming analysis by adding, for each material, a usage condition of the material specified in an analysis item in the history-information;
an adding unit that performs, for each material, cumulative addition of a usage condition of the material including the usage condition of the material estimated by the usage quantity estimating unit; and
a notifying unit that notifies the host apparatus of the usage condition of the material added by the adding unit, the host apparatus managing the usage condition of the material.

6. The automatic analyzer according to claim 4 or 5, wherein
the material includes at least one of a detergent liquid, a lamp, a Ferista tube, and a syringe, and
the analysis history storing unit stores therein any one of a usage quantity of the detergent liquid, a usage time of the lamp, a usage count of the Ferista tube, and a usage count of the syringe in association with an analysis period, a specimen count, and an analysis item of the analysis performed in past.

7. An order management system in which a communication network is made up of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a reagent supplying source, the order management system performing reagent ordering from the automatic analyzer to the reagent supplying source, wherein
the automatic analyzer includes
an analysis history storing unit that stores therein history information of an analysis period, a specimen count, and an analysis item of analysis performed in past;
a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating unit that calculates a current reagent remaining quantity;
an upcoming-remaining-quantity calculating unit that calculates a post-upcoming-analysis reagent remaining quantity by subtracting the usage quantity of the reagent estimated by the usage quantity estimating unit from the current reagent remaining quantity calculated by the current-remaining-quantity calculating unit; and
a reagent ordering unit that manages the remaining quantity, the reagent ordering unit placing an order for the reagent to a reagent supplying source if the reagent remaining quantity calculated by the upcoming-remaining-quantity calculating unit is a positive value, and
the managing device includes a reagent-order receiving unit that receives an order for the reagent from the automatic analyzer.

8. An order management system in which a communication network is made up of a plurality of automatic analyzers for analyzing a specimen by assaying a test liquid containing a predetermined quantity of a reagent dispensed according to an analysis item from a reagent bottle and a predetermined quantity of the specimen and a managing device connected to the automatic analyzer via a host apparatus and functioning as a reagent supplying source, the order management system performing reagent ordering from the respective automatic analyzers to the reagent supplying source, wherein
each of the automatic analyzers includes
an analysis history storing unit that stores therein history information of an analysis period, a specimen count, and an analysis item of analysis performed in past;
a usage quantity estimating unit that estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating unit that calculates a current reagent remaining quantity;
an upcoming-remaining-quantity calculating unit that calculates a post-upcoming-analysis reagent remaining quantity by subtracting the usage quantity of the reagent estimated by the usage estimating unit from the current reagent remaining quantity calculated by the current-remaining-quantity calculating unit; and
a notifying unit that notifies the host apparatus of the reagent remaining quantity calculated by the upcoming-remaining-quantity calculating unit,
the host apparatus includes
an overall reagent-remaining-quantity estimating unit that calculates an overall estimated reagent remaining quantity by adding the reagent remaining quantities notified by the respective automatic analyzers; and
a reagent ordering unit that manages the remaining quantity of the reagent, and determines necessity of reagent ordering, the reagent ordering unit placing an order for the reagent to a reagent supplying source if determining that the reagent ordering is necessary, and
the managing device includes a reagent-order receiving unit that receives an order for the reagent.

9. The order management system according to claim 7 or 8, wherein
each of the automatic analyzers further includes an information reading unit that reads a reagent quantity of stocked reagent, and
the current-remaining-quantity calculating unit calculates a current reagent remaining quantity that includes the reagent quantity of the reagent read by the information reading unit.

10. An order management system in which a communication network is made of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a material supplying source, the managing device performing reagent ordering from the automatic analyzer to the material supplying source, wherein
the automatic analyzer includes
an analysis history storing unit that stores therein history information of an analysis period, a specimen count, and an analysis item of analysis performed in past and any one of usage conditions including a usage quantity, a usage time, and a usage count of a material used in the analysis performed in past;
a usage estimating unit that estimates, based on the history information of an analysis period corresponding to a period required for upcoming analysis, a usage condition of the material for the upcoming analysis by adding, for each material, a usage condition of the material specified in an analysis item in the history information;
an adding unit that performs, for each material, cumulative addition of a usage condition of the material including the usage condition of the material estimated by the usage quantity estimating unit; and
a material ordering unit that manages the usage condition for the material, the material ordering unit instructing issuing of a warning notice and placing an order for the material to a material supplying source if the usage condition of the material cumulatively added by the adding unit reaches a usage limit condition for the material, and
the managing device includes a material-order receiving unit that receives an order for the material from the automatic analyzer.

11. An order management system in which a communication network is made up of a plurality of automatic analyzers for analyzing a specimen by assaying a test liquid containing a predetermined quantity of a reagent dispensed according to an analysis item from a reagent bottle and a predetermined quantity of the specimen and a managing device connected to the automatic analyzers via a host apparatus and functioning as a material supplying source, the order management system performing material ordering from the respective automatic analyzers to the material supplying source, wherein
each of the automatic analyzers includes
an analysis history storing unit that stores therein history information of an analysis period, a specimen count, and an analysis item of analysis performed in past and any one of usage conditions including a usage quantity, a usage time, and a usage count of a material used in the analysis performed in past;
a usage estimating unit that estimates, based on the history information of an analysis period corresponding to a period required for upcoming analysis, a usage condition of the material for the upcoming analysis by adding, for each material, a usage condition of the material specified in an analysis item in the history information;
an adding unit that performs, for each material, cumulative addition of a usage condition of the material including the usage condition of the material estimated by the usage quantity estimating unit; and
a notifying unit that notifies the host apparatus of the usage condition of the material added by the adding unit, the host apparatus managing the usage condition of the material,
the host apparatus includes
an overall cumulative addition performing unit that calculates an overall cumulative usage condition by adding the usage conditions of the material notified by the respective automatic analyzers;
a warning unit that issues a warning notice if the usage condition of the material added by the overall cumulative addition performing unit reaches a usage limit condition for the material; and
a material ordering unit that that manages the usage condition of the material, the material ordering unit placing an order for the material to a material supplying source if the usage condition of the material added by the overall cumulative addition performing unit reaches a usage limit condition for the material, and
the managing device includes a material-order receiving unit that receives an order for the material.

12. An order management method comprising:
a making-up step in which a communication network is made up of an automatic analyzer for analyzing a specimen by assaying a test liquid containing a predetermined quantity of a reagent dispensed according to an analysis item from a reagent bottle and a predetermined quantity of the specimen and a managing device connected to the automatic analyzer and functioning as a reagent supplying source;
an analysis history storing step in which the automatic analyzer stores history information of an analysis period, a specimen count, and an analysis item of analysis performed in past;
a usage quantity estimating step in which the automatic analyzer estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating step in which the automatic analyzer calculates a current reagent remaining quantity;
an upcoming-remaining-quantity calculating step in which the automatic analyzer calculates a post-upcoming-analysis reagent remaining quantity by subtracting the usage quantity of the reagent estimated in the usage quantity estimating step from the current reagent remaining quantity calculated in the current-remaining-quantity calculating step;
a reagent ordering step in which the automatic analyzer manages the remaining quantity of the reagent, and the automatic analyzer places an order for the reagent to a reagent supplying source if the reagent remaining quantity calculated in the upcoming-remaining-quantity calculating step is a positive value; and
a receiving step in the managing device that includes receiving an order for the reagent from the automatic analyzer.

13. An order management method comprising:
a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing reagent ordering, and a communication network is made up between the host apparatus and a managing device functioning as a reagent supplying source;
an analysis history storing step in which each of the automatic analyzers stores history information of an analysis period, a specimen count, and an analysis item of analysis performed in past;
a usage quantity estimating step in which each of the automatic analyzers estimates, based on the history information of an analysis period corresponding to a period required for upcoming analysis, a usage quantity of the reagent for the upcoming analysis by calculating a product of a usage quantity of a reagent specified in an analysis item in the history information and a specimen count in the analysis period;
a current-remaining-quantity calculating step in which each of the automatic analyzers calculates a current reagent remaining quantity;
an upcoming-remaining-quantity calculating step in which each of the automatic analyzers calculates a post-upcoming-analysis reagent remaining quantity by subtracting the usage quantity of the reagent estimated in the usage quantity estimating step from the current reagent remaining quantity calculated in the current-remaining-quantity calculating step;
a notifying step in which each of the automatic analyzers notifies the host apparatus of the reagent remaining quantity calculated in the upcoming-remaining-quantity calculating step;
a reagent ordering step in which the host apparatus manages the reagent quantity, and the host apparatus calculates an overall remaining quantity by adding the reagent remaining quantities notified by the respective automatic analyzers if the overall remaining quantity is a positive value; and
an order receiving step in which the managing device receives an order for the reagent from the host apparatus.

14. The order management method according to claim 12 or 13, further comprising an information reading step in which each of the automatic analyzers reads a reagent quantity of stocked reagent, wherein
the current-remaining-quantity calculating step includes calculating a current reagent remaining quantity that includes the reagent quantity of the reagent read.

15. An order management system comprising:
a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing material ordering, and a communication network is made up between the host apparatus and a managing device functioning as a reagent supplying source;
an analysis history storing step in which each of the automatic analyzers stores history information of an analysis period, a specimen count, and an analysis item of analysis performed in past and any one of usage conditions including a usage quantity, a usage time, and a usage count of a material used in the analysis performed in past;
a usage quantity estimating step in which each of the automatic analyzers estimates, based on the history information of an analysis period corresponding to a period required for upcoming analysis, a usage condition of the material for the upcoming analysis by adding, for each material, a usage condition of the material specified in an analysis item in the history information;
an adding step in which each of the automatic analyzers performs, for each material, cumulative addition of a usage condition of the material including the usage condition of the material estimated by the usage quantity estimating unit;
a warning step in which each of the automatic analyzers issues a warning notice if the usage condition of the material added in the adding step reaches a usage limit condition for the material; and
a material ordering step in which the usage condition of the material is managed, a warning notice is issued and an order for the material to a material supplying source is placed if the usage condition of the material cumulatively added by the adding unit reaches a usage limit condition for the material.

16. An order management system comprising:
a making-up step in which a plurality of automatic analyzers for analyzing a specimen by assaying a test liquid containing a predetermined quantity of a reagent dispensed according to an analysis item from a reagent bottle and a predetermined quantity of the specimen are connected to a host apparatus for performing material ordering, and a communication network is made up between the host apparatus and a managing device functioning as a material supplying source;
an analysis history storing step in which each of the automatic analyzers stores history information of an analysis period, a specimen count, and an analysis item of analysis performed in past and any one of usage conditions including a usage quantity, a usage time, and a usage count of a material used in the analysis performed in past;
a usage condition estimating step in which each of the automatic analyzers estimates, based on the history information of an analysis period corresponding to a period required for upcoming analysis, a usage condition of the material for the upcoming analysis by adding, for each material, a usage condition of the material specified in an analysis item in the history information;
an adding step in which each of the automatic analyzers performs, for each material, cumulative addition of a usage condition of the material including the usage condition of the material estimated in the usage condition estimating step; and
a notifying step in which each of the automatic analyzers notifies the host apparatus of the usage condition of the material added in the adding step, the host apparatus managing the usage condition of the material.
